# FASCICULE DE BREVET EUROPEEN

(11) **EP 3 794 661 B1**
(45) Date de publication et mention de la délivrance du brevet: **28.08.2024**
(21) Numéro de dépôt: 19802496.0
(22) Date de dépôt: 15.05.2019
(51) Int. Cl.: H01M 4/66, H01M 10/0525, H01M 4/62, H01M 10/054, H01M 4/131, H01M 4/136, H01M 4/1391, H01M 4/1397, H01M 4/80

(54) **FILMS AUTOPORTANTS À BASE DE CELLULOSE POUR UTILISATION DANS DES BATTERIES LI-ION**
SELBSTTRAGENDE FILME AUF CELLULOSEBASIS ZUR VERWENDUNG BEI LI-IONEN-BATTERIEN
CELLULOSE-BASED SELF-SUPPORTING FILMS FOR USE IN LI-ION BATTERIES

(30) Priorité: 15.05.2018 US 201862671612 P; 07.09.2018 US 201862728301 P
(43) Date de publication de la demande: 24.03.2021
(73) Titulaire: Hydro-Québec, Montréal, Québec H2Z 1A4 (CA)
(72) Inventeur: DELAPORTE, Nicolas, Montréal, Québec H1W 1H4 (CA); GUERFI, Abdelbast, Brossard, Québec J4X 1W2 (CA); ZAGHIB, Karim, Longueuil, Québec J4N 1T8 (CA)
(74) Mandataire: Lavoix
(86) Numéro de dépôt international: PCT/CA2019/050657
(87) Numéro de publication internationale: WO 2019/218067

(56) Documents cités:
- WO-A1-2012/035217
- CA-A1- 2 985 660
- FR-A1- 3 038 145
- DELAPORTE ET AL.: "Chemically grafted carbon-coated LiFePO4 using diazonium chemistry", JOURNAL OF POWER SOURCES, vol. 280, 2015, pages 246 - 255, XP055331656, DOI: 10.1016/j.jpowsour.2015.01.014

## Description

### DOMAINE TECHNIQUE

Le domaine technique concerne généralement les électrodes autoportantes, leurs méthodes de fabrication et leur utilisation dans des cellules électrochimiques, par exemple dans des batteries au lithium-ion.

### CONTEXTE

Les recherches récentes dans le domaine des batteries lithium-ion (BLIs) se sont concentrées principalement sur la réduction des coûts de production et l'amélioration des performances. Des nouveaux matériaux et procédés de production des BLIs respectueux de l'environnement ont aussi été le sujet de plusieurs études.

Dans ce contexte, l'introduction de la cellulose en tant que matériau pour les BLIs est très prometteuse. Par exemple, quelques études portent sur la préparation d'électrodes flexibles pour batteries et supercondensateurs et impliquent l'utilisation de la cellulose comme substrat (voir Hu, L. et al., Proceedings of the National Academy of Sciences 106.51 (2009): 21490-21494; Hu, L. et al., Applied Physics Letters 96.18 (2010): 183502; et Hu, L. et al., Advanced Energy Materials 1.6 (2011): 1012-1017) ou comme liant (voir Nystrôm, G. et al. The Journal of Physical Chemistry B 114.12 (2010): 4178-4182; et Pushparaj, V. L. et al., Proceedings of the National Academy of Sciences 104.34 (2007): 13574-13577). Cependant, les procédés de production impliquent toujours l'utilisation de solvants organiques, de liants synthétiques ou de matériaux coûteux et difficiles à éliminer (par exemple, des nanotubes de carbone (NTCs)). De plus, dans la plupart des études, la cellulose est modifiée et transformée afin d'obtenir des fibres plus courtes ou de moduler le potentiel zêta de la dispersion. À ce titre, le sulfate d'aluminium hydraté est souvent utilisé comme agent floculant avant l'addition de carbone (voir Jabbour, L. et al., Cellulose 20.1 (2013): 571-582). En utilisant cet agent floculant, les cations d'aluminium servent à neutraliser la charge négative présente sur les fibres de cellulose (voir Anderson, R. E. et al., Journal of Materials Chemistry 20.12 (2010): 2400-2407; et Hubbe, M. A., et al., Paper Technol 45.9 (2004): 27-34). Néanmoins, ce composé peut à nouveau réagir à l'intérieur de la batterie.

Lors d'études récentes, il a été démontré que la cellulose microfibrillée et les fibres de cellulose hautement raffinées dispersées dans de l'eau pouvaient être utilisées efficacement comme liant pour la fabrication d'électrodes négatives autoportantes présentant de très bonnes performances électrochimiques et mécaniques (voir Jabbour, L. et al., Journal of Materials Chemistry 20.35 (2010): 7344-7347; et Jabbour, L. et al., Journal of Materials Chemistry22.7 (2012): 3227-3233). Cependant, des traitements chimiques, enzymatiques, et par hydrolyse acide sont nécessaires afin d'obtenir des fibres dont le diamètre est compris entre 5 et 250 nm, augmentant ainsi les coûts et le temps de préparation des films autoportants (voir Jabbour, L. et al., Cellulose 20.4 (2013): 1523-1545).

La réduction de la masse de l'électrode est une autre préoccupation de l'industrie des BLIs. Les électrodes autoportantes deviennent très intéressantes dans ce contexte puisque les collecteurs de courant ont un impact significatif sur la masse de l'électrode. Par exemple, un collecteur de courant en aluminium représente au moins 40% de la masse totale d'une électrode de phosphate de fer lithié (LiFePO₄ ou LFP) avec une charge d'environ 6 mg/cm² de matériau actif. Le remplacement de la masse du collecteur de courant en aluminium par des collecteurs de courant légers comprenant du carbone et/ou des fibres de carbone conduit à un film plus conducteur et à de meilleures performances. De plus, les feuilles de collecteur de courant métallique inactives non seulement augmentent le poids global de la cellule, mais peuvent également être affectées par des problèmes de corrosion (voir Zhang, S. S. et al., Journal of Power Sources 109.2 (2002): 458-464).

Des efforts ont également été consacrés à la réduction des coûts de production des BLIs. Selon les modélisations des coûts, 50% du prix des BLIs proviennent des matériaux d'électrodes composites et des collecteurs de courant (voir Wood, D. L. et al., Journal of Power Sources 275 (2015): 234-242). Les auteurs ont aussi estimé les coûts d'une dispersion dans le polyfluorure de vinylidène (PVDF) comme étant de 19 à 23 USD/kg contre 0.5 à 1.4 USD/kg pour la carboxyméthylcellulose (CMC).

Les électrodes organiques sont aussi connues comme étant de bons candidats potentiels pour la prochaine génération de BLIs (voir Armand, M. et al., Nature 451 (2008): 652-657; et Tarascon J. M., Philosophical Transactions of the Royal Society A 368 (2010): 3227-3241). Les électrodes organiques pourraient par exemple réduire les coûts de fabrication de la batterie, car les matières organiques peuvent être préparées à partir de produits naturels ou de biomasse (voir Chen, H. et al., ChemSusChem: Chemistry & Sustainability Energy & Materials 1.4 (2008): 348-355). De plus, en raison de l'absence de structures inorganiques et de métaux tels que le cobalt ou le nickel, les batteries comprenant des matériaux organiques peuvent être plus écologiques et entièrement recyclables.

FR 3 038 145 concerne un procédé de préparation d'une électrode composite comprenant un matériau composite déposé sur un collecteur de courant, ledit procédé comprenant une étape de fonctionnalisation d'un agent carboné, afin de former un agent carboné fonctionnalisé, ledit procédé comprenant en outre la préparation d'une pâte aqueuse ou organique comprenant l'agent fonctionnalisé, au moins une matière active et au moins un polymère hydrophile comprenant plusieurs fonctions alcool et la mise en contact de la pâte aqueuse ou organique avec le collecteur de courant et la traitement thermique de la pâte aqueuse ou organique et du collecteur de courant.

Par conséquent, il existe un besoin pour d'électrodes autoportantes excluant un ou plusieurs des inconvénients rencontrés avec les électrodes conventionnelles. Il existe également un besoin pour des procédés de fabrication d'électrodes autoportantes plus simples et efficaces.

### SOMMAIRE

Selon un aspect, la présente technologie concerne une électrode autoportante comprenant :
- un premier matériau conducteur électronique servant de collecteur de courant, la surface dudit premier matériau conducteur électronique étant greffée avec au moins un groupement aryle de Formule I : 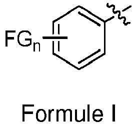 dans laquelle :
   FG est un groupe fonctionnel hydrophile; et
   n est un nombre entier naturel compris dans l'intervalle de 1 à 5, de préférence n est compris dans l'intervalle de 1 à 3, de préférence n est 1 ou 2, ou plus préférentiellement n est 1 ;
- un liant comprenant des fibres de cellulose; et
- un matériau électrochimiquement actif;
dans laquelle,
l'électrode autoportante est constituée d'un film solide ayant une première et une deuxième surface;
la concentration du premier matériau conducteur électronique augmente de la deuxième surface à la première surface du film solide; et
la concentration du matériau électrochimiquement actif augmente de la première surface à la deuxième surface du film solide.

Dans un mode de réalisation, l'électrode autoportante telle que définie ici comprend en outre un deuxième matériau conducteur électronique, la concentration dudit deuxième matériau conducteur électronique allant augmentant de la première surface à la deuxième surface du film solide.

Dans un autre mode de réalisation, le premier matériau conducteur électronique comprend des fibres de carbone. Par exemple, les fibres de carbone sont des fibres de carbone formées en phase gazeuse (VGCFs).

Dans un autre mode de réalisation, les fibres de cellulose sont des fibres de cellulose non modifiées. Par exemple, la longueur moyenne des fibres de cellulose est comprise entre 5 nm et 5 mm, ou entre 250 nm et 3 mm, ou entre 500 nm et 3 mm, ou entre 1 µm et 3 mm, ou entre 100 µm et 3 mm, ou entre 250 µm et 3 mm, ou entre 500 µm et 3 mm, ou entre 750 µm et 2,5 mm, ou encore entre 1 mm et 2,5 mm.

Dans un autre mode de réalisation, le matériau électrochimiquement actif est sous forme de particules enrobées d'une couche de carbone dans une configuration noyau-enrobage (*core-shell*)*.* Par exemple, ladite couche de carbone peut être greffée avec au moins un groupement aryle de Formule I.

Dans un autre mode de réalisation, le matériau électrochimiquement actif est choisi parmi des particules d'oxyde de métal, des particules d'oxyde de métal lithié, des particules de phosphate de métal, des particules de phosphate de métal lithié, des matériaux à base de carbone et des matériaux actifs organiques. Par exemple, le métal est un métal de transition choisi parmi le titane (Ti), le fer (Fe), le manganèse (Mn), le vanadium (V), le nickel (Ni), le cobalt (Co) et une combinaison d'au moins deux de ceux-ci.

Dans un mode de réalisation, l'électrode autoportante est une électrode positive. Par exemple, le matériau électrochimiquement actif comprend des particules de phosphate de fer lithié (LiFePO₄ ou LFP) ou comprend du dianhydride pyromellitique (PMDA), du dianhydride naphtalène-1,4,5,8-tétracarboxylique (NTCDA) ou du dianhydride pérylène-3,4,9,10-tétracarboxylique (PTCDA).

Dans un autre mode de réalisation, l'électrode autoportante est une électrode négative. Par exemple, le matériau électrochimiquement actif comprend des particules de titanate de lithium (Li₄Ti₅O₁₂, aussi appelé LTO) ou un matériau à base de carbone. Par exemple, le matériau à base de carbone est du graphène ou du graphite.

Dans un autre mode de réalisation, le deuxième matériau conducteur électronique est choisi parmi le noir de carbone, le noir d'acétylène, le graphite, le graphène, les fibres de carbone, les nanofibres de carbone, les nanotubes de carbone et une combinaison d'au moins deux de ceux-ci. Par exemple, le deuxième matériau conducteur électronique est choisi parmi le noir d'acétylène (tel que le noir Denka^{MC}), les fibres de carbones, les nanotubes de carbone, et leurs combinaisons. De préférence, le deuxième matériau conducteur électronique comprend des fibres de carbone, une combinaison de fibres de carbone et de noir d'acétylène (tel le noir Denka^{MC}), ou une combinaison de fibres de carbone et de nanotubes de carbone. Par exemple, les fibres de carbone sont des fibres de carbone formées en phase gazeuse (VGCFs). Les fibres de carbone peuvent être présentes dans la combinaison à une concentration d'au moins 50% en poids.

Dans un autre mode de réalisation, le deuxième matériau conducteur électronique est en outre greffé avec au moins un groupement aryle de Formule I.

Dans un autre mode de réalisation, le groupe fonctionnel hydrophile est un groupe acide carboxylique ou acide sulfonique. Selon un exemple, le groupement aryle de Formule I est l'acide p-benzoïque ou l'acide p-benzènesulfonique.

Selon un autre aspect, la présente technologie concerne un procédé pour la fabrication d'une électrode autoportante telle qu'ici définie, le procédé comprenant les étapes suivantes :
(a) greffer au moins un groupement aryle de Formule I sur un premier matériau conducteur électronique;
(b) disperser le premier matériau conducteur électronique dans un mélange aqueux comprenant des fibres de cellulose pour obtenir une première dispersion aqueuse;
(c) filtrer la première dispersion aqueuse sur une membrane filtrante pour obtenir un film;
(d) disperser un matériau électrochimiquement actif et éventuellement un deuxième matériau conducteur électronique dans un milieu aqueux pour obtenir une deuxième dispersion aqueuse;
(e) filtrer la deuxième dispersion aqueuse sur le film obtenu à l'étape (c) pour produire une électrode autoportante sur la membrane filtrante; et
(f) décoller l'électrode autoportante de la membrane filtrante.

Dans un autre mode de réalisation, le film obtenu à l'étape (c) comprend un côté riche en premier matériau conducteur électronique et un côté riche en fibres de cellulose, le côté riche en premier matériau conducteur électronique faisant face à la membrane filtrante.

Dans un autre mode de réalisation, le matériau électrochimiquement actif est sous forme de particules enrobées d'une couche de carbone et le procédé comprend en outre une étape de greffage d'au moins un groupement aryle de Formule I sur ladite couche de carbone avant l'étape (d).

Dans un autre mode de réalisation, le procédé tel qu'ici défini comprend en outre une étape de calandrage de l'électrode autoportante. Par exemple, l'étape de calandrage est effectuée à une température comprise entre la température ambiante et environ 80 °C.

Dans un autre mode de réalisation, le présent procédé comprend en outre une étape de préparation d'un séparateur par filtration d'un mélange aqueux comprenant des fibres de cellulose directement sur l'électrode autoportante obtenue à l'étape (e), avant l'étape (f).

Dans un autre mode de réalisation, le procédé tel que défini ici comprend en outre une étape de greffage d'au moins un groupement aryle de Formule I sur le deuxième matériau conducteur électronique avant l'étape (d). Par exemple, les étapes de greffage du procédé comprennent :
(i) générer un ion aryle diazonium à partir d'une aniline de Formule II: 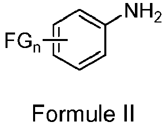 dans laquelle FG et n sont tels que définis ici, en présence d'un agent de diazotation; et
(ii) réagir l'ion aryle diazonium généré à l'étape (i) avec le premier ou le deuxième matériau conducteur électronique, ou avec la couche de carbone sur le matériau électrochimiquement actif.

Dans un autre mode de réalisation, l'agent de diazotation est présent dans une plage de valeurs allant de 0,01 à 0,04 équivalent par rapport au carbone, ou d'environ 0,03 équivalent par rapport au carbone. Alternativement, l'agent de diazotation est présent dans une quantité située dans l'intervalle allant de 1 à 4 équivalents molaires par rapport à l'aniline de Formule II, ou d'environ 3 équivalents molaires par rapport aniline de Formule II. Par exemple, l'agent de diazotation est un sel de nitrite ou un nitrite d'alkyle, tels que le nitrite de sodium (NaNO₂) ou le nitrite de tert-butyle (t-BuONO).

Dans un autre mode de réalisation, l'ion aryle diazonium est généré *in situ* de sorte que les étapes (i) et (ii) sont effectuées simultanément.

Selon un autre aspect, la présente technologie concerne une cellule électrochimique comprenant une électrode négative, une électrode positive et un électrolyte, dans laquelle au moins l'une des électrodes négative et positive est une électrode autoportante telle qu'ici définie. Dans l'alternative, l'électrode négative et l'électrode positive sont toutes deux des électrodes autoportantes.

Dans un autre mode de réalisation, la présente cellule électrochimique comprend en outre un séparateur. Par exemple, le séparateur est un séparateur de polypropylène (PP), un séparateur de polypropylène-polyéthylène-polypropylène (PP/PE/PP) ou un séparateur cellulosique. De préférence, le séparateur est un séparateur cellulosique. Par exemple, le séparateur cellulosique est produit par filtration d'un mélange aqueux comprenant des fibres de cellulose directement sur la surface riche en matériau électrochimiquement actif de l'électrode autoportante.

Dans un autre mode de réalisation, l'électrolyte est un électrolyte liquide comprenant un sel de lithium dans un solvant. Selon une alternative, l'électrolyte est un électrolyte gel comprenant un sel de lithium dans un solvant et éventuellement un polymère solvatant. Selon une autre alternative, l'électrolyte est un électrolyte polymère solide comprenant un sel de lithium dans un polymère solvatant.

Selon un autre aspect, la présente technologie concerne une batterie comprenant au moins une cellule électrochimique telle qu'ici définie. Par exemple, la batterie est une batterie au lithium ou lithium-ion, une batterie au sodium ou sodium-ion, et une batterie au magnésium ou magnésium-ion. Selon un mode préférentiel, la batterie est une batterie au lithium-ion.

### BRÈVE DESCRIPTION DES DESSINS

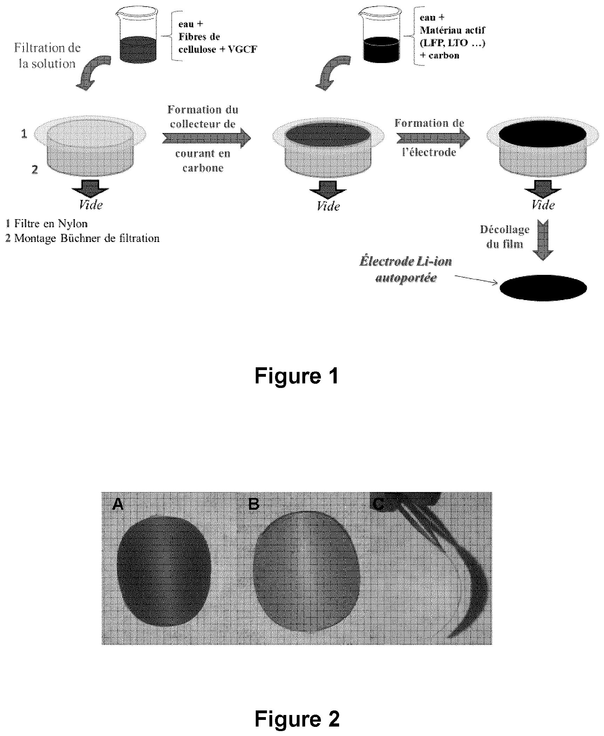

La Figure 1 illustre de façon schématique le procédé de préparation d'électrodes autoportantes flexibles selon un mode de réalisation.
La Figure 2 présente des photographies d'un film décrit à l'Exemple 1(d) montrant en (A) un côté riche en matériau conducteur électronique; (B) un côté riche en fibres de cellulose; et (C) la flexibilité et la faible épaisseur du film.

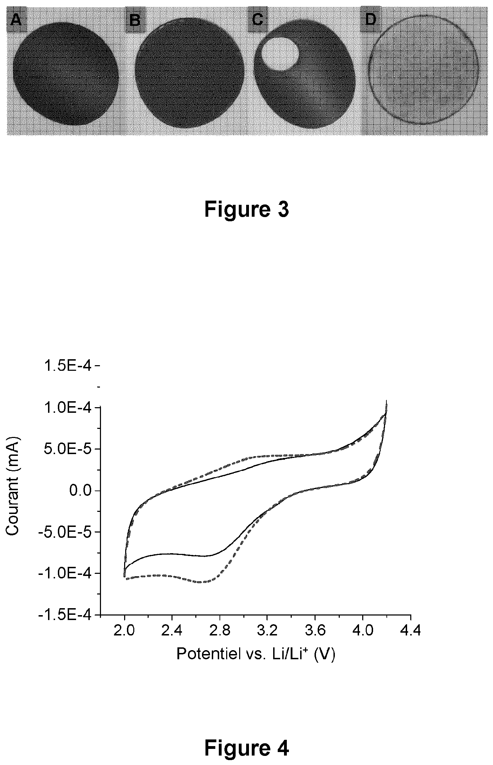

La Figure 3 présente des photographies d'une électrode autoportante décrite à l'Exemple 1(d) montrant en (A) un côté riche en matériau conducteur électronique; (B) le matériau électrochimiquement actif remplissant les pores du côté riche en fibres de cellulose; (C) que le film reste intact et résistant même après le découpage d'une petite électrode; et en (D) d'un film électrode-séparateur autoportant tel que décrit à l'Exemple 1(e).
La Figure 4 montre les résultats de voltamétrie cyclique d'une électrode en papier (ligne discontinue) et d'une électrode nue (ou de référence) tel que décrites à l'Exemple 3 (ligne pleine).

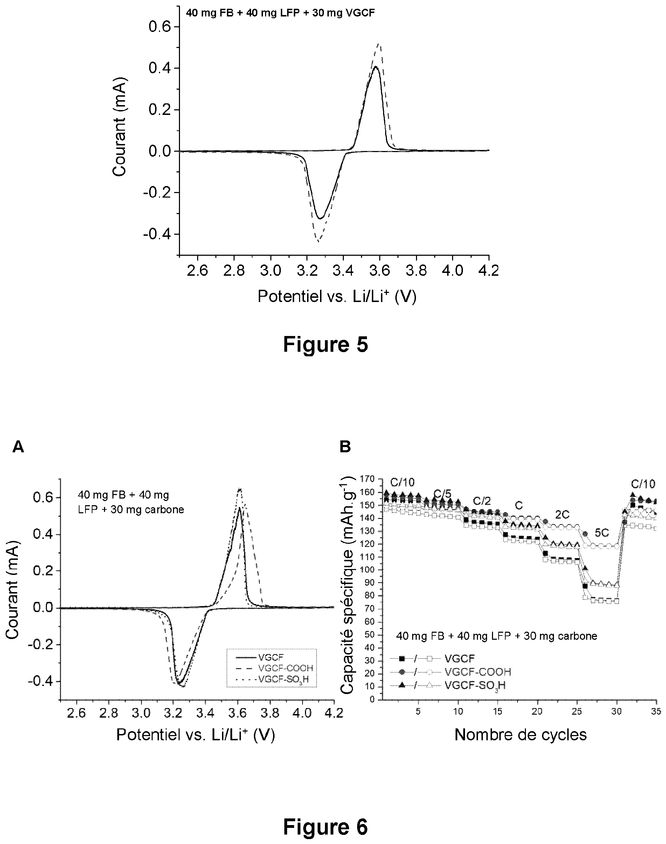

La Figure 5 présente les voltamogrammes cycliques d'une électrode autoportante enregistrés avec une électrode autoportante avec séparateur de papier intégré telle que décrite à l'Exemple 1(e) (ligne discontinue) et une électrode autoportante telle que décrite à l'Exemple 1(d) utilisant un séparateur Celgard^{MC} (ligne pleine).
La Figure 6 présente les résultats (A) de voltamétrie cyclique; et (B) de capacité en fonction du nombre de cycles à des régimes de charge et de décharge entre C/10 et 5C, obtenus avec trois électrodes autoportantes contenant respectivement du VGCFs non modifié, du VGCFs-COOH, et du VGCFs-SOsH. Les symboles pleins et vides sont utilisés en (B) pour représenter les résultats en charge et en décharge, respectivement.

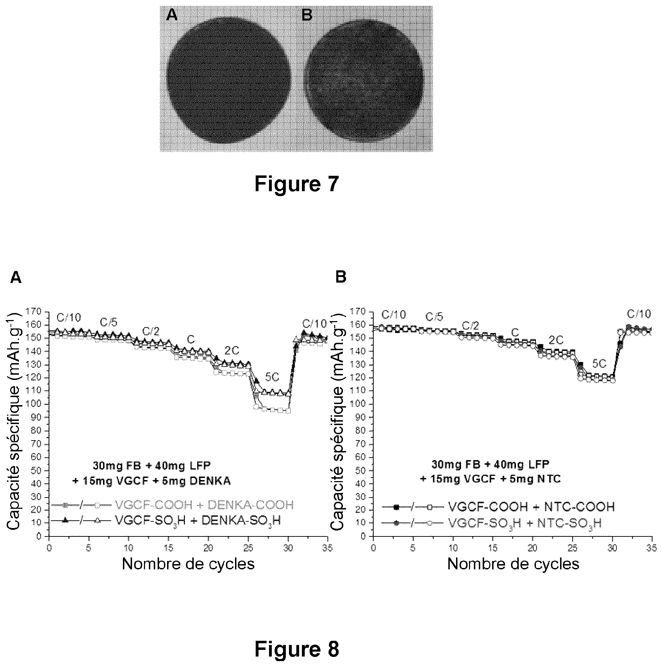

La Figure 7 montre des photographies de (A) l'électrode de LFP autoportante comprenant des VGCFs non modifiés, et (B) l'électrode de LFP autoportante comprenant VGCFs-COOH.
La Figure 8 présente les résultats de capacité en fonction du nombre de cycles à des régimes de charge et de décharge entre C/10 et 5C enregistrés avec (A) une combinaison de VGCFs-COOH et de Denka-COOH ou une combinaison de VGCFs-SO₃H et de Denka-SO₃H; et (B) une combinaison de VGCFs-COOH et de NTCs-COOH ou une combinaison de VGCFs-SO₃H et de NTCs-SOsH. Les symboles pleins et vides sont utilisés pour représenter les résultats en charge et en décharge, respectivement.

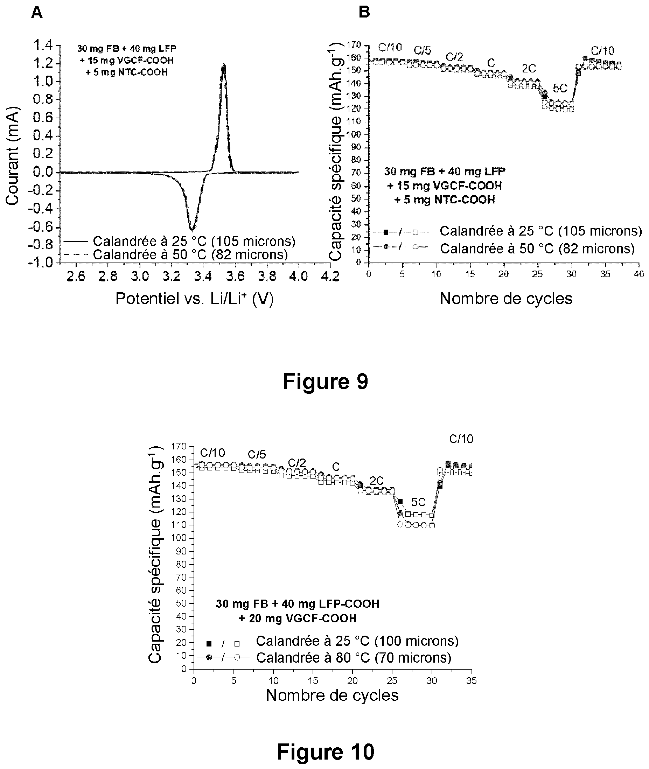

La Figure 9 présente les résultats (A) de voltamétrie cyclique; et (B) de capacité en fonction du nombre de cycles à des régimes de charge et de décharge entre C/10 et 5C, obtenus avec deux électrodes de LFP comprenant un mélange de carbones VGCFs-COOH et NTCs-COOH, l'une calandrée à une température de 25°C et l'autre à 50°C. Les symboles pleins et vides sont utilisés en (B) pour représenter les résultats en charge et en décharge, respectivement.
La Figure 10 montre les résultats de capacité en fonction du nombre de cycles à des régimes de charge et de décharge entre C/10 et 5C, pour des électrodes de LFP fabriquées avec le matériau modifié LFP-COOH et calandrées à 25°C et à 80 °C. Les symboles pleins et vides sont utilisés pour représenter les résultats en charge et en décharge, respectivement.

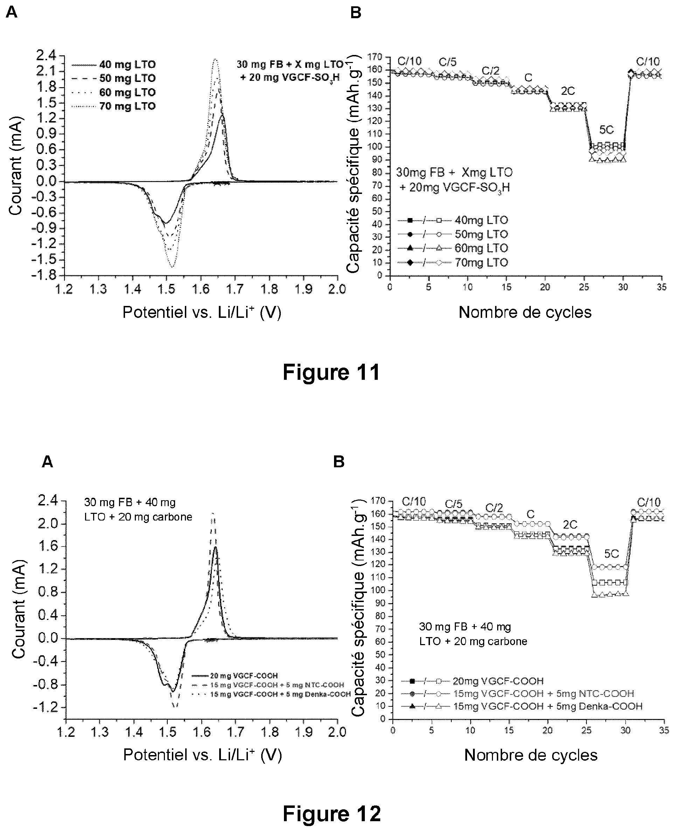

La Figure 11 présente les résultats (A) de voltamétrie cyclique; et (B) de capacité en fonction du nombre de cycles à des régimes de charge et de décharge entre C/10 et 5C, obtenus avec quatre électrodes comprenant différentes quantités de LTO et du VGCFs-SOsH. Les symboles pleins et vides sont utilisés en (B) pour représenter les résultats en charge et en décharge, respectivement.
La Figure 12 présente les résultats (A) de voltamétrie cyclique; et (B) de capacité en fonction du nombre de cycles à des régimes de charge et de décharge entre C/10 et 5C, obtenus avec trois électrodes de LTO différentes comprenant du VGCFs-COOH, un mélange de VGCFs-COOH et de NTCs-COOH, ou un mélange de VGCFs-COOH et de Denka-COOH. Les symboles pleins et vides sont utilisés en (B) pour représenter les résultats en charge et en décharge, respectivement.

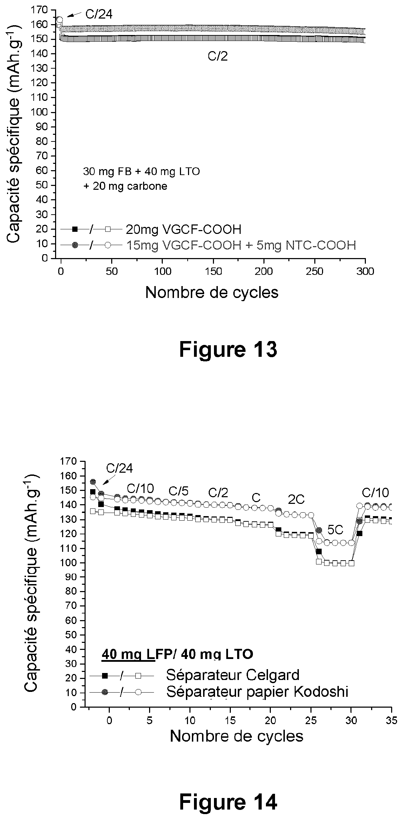

La figure 13 montre les résultats de capacité spécifique sur 300 cycles à un courant de charge/décharge constant de C/2 compris entre 1,2 et 2,5 V *vs* Li/Li+ enregistrés avec deux électrodes de LTO, l'une contenant du VGCFs-COOH, l'autre contenant un mélange de VGCFs-COOH et de NTCs-COOH. Les symboles pleins et vides sont utilisés pour représenter les résultats en charge et en décharge, respectivement.
La Figure 14 montre les résultats de capacité en fonction du nombre de cycles à des régimes de charge et de décharge entre C/24 et 5C, pour des batteries LFP/LTO (rapport en poids = 1) avec des séparateurs polymère Celgard ^{MC} et papier Kodoshi ^{MC}. Les symboles pleins et vides sont utilisés pour représenter les résultats en charge et en décharge, respectivement.

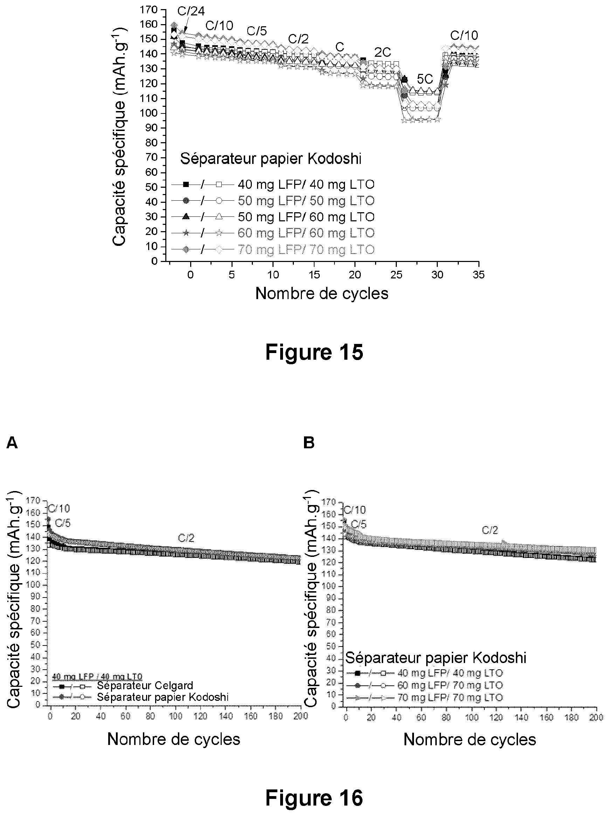

La Figure 15 montre les résultats de capacité en fonction du nombre de cycles à des régimes de charge et de décharge entre C/24 et 5C, pour des batteries LFP/LTO fabriquées avec différentes quantités de LFP et de LTO et avec des rapports en poids LFP/LTO de 1 ou d'environ 0,85. Des séparateurs de papier Kodoshi ^{MC} ont été utilisés pour toutes les électrodes. Les symboles pleins et vides sont utilisés pour représenter les résultats en charge et en décharge, respectivement.
La figure 16 montre les résultats de capacité spécifique sur 200 cycles à un courant de charge/décharge constant de C/2 entre 1,0 et 2,5 V *vs* LTO, où la stabilité est comparée pour (A) des batteries LFP/LTO identiques excepté pour l'utilisation de séparateurs Celgard ^{MC} (carrés) et papier Kodoshi ^{MC} (cercles); et (B) des batteries LFP/LTO utilisant des séparateurs papier Kodoshi ^{MC} et différentes quantités de LFP et de LTO avec un rapport LFP/LTO en poids de 1 ou d'environ 0,85. Les symboles pleins et vides sont utilisés pour représenter les résultats en charge et en décharge, respectivement.

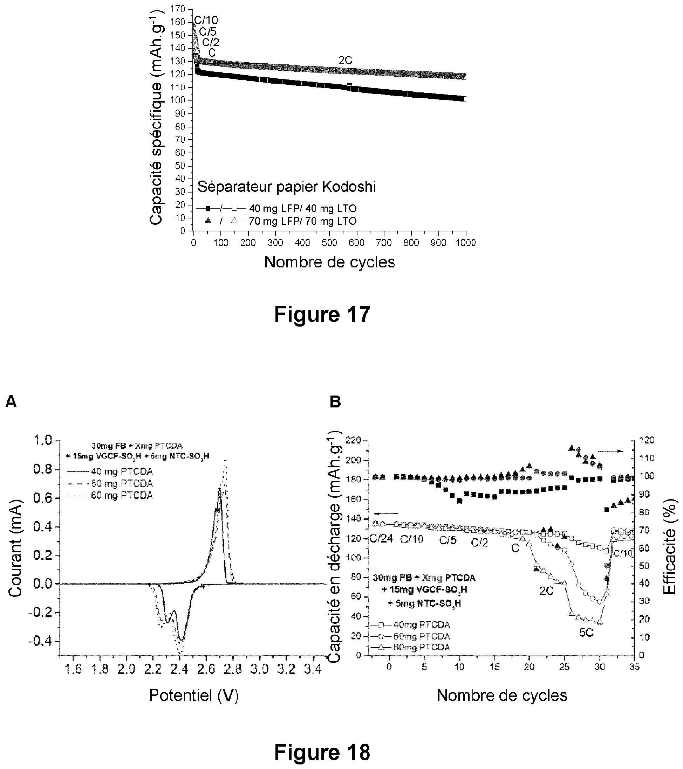

La figure 17 montre les résultats de capacité spécifique sur 1000 cycles à un courant de charge/décharge constant de 2C entre 1,0 et 2,5 V *vs* LTO, pour des batteries LFP/LTO en variant la quantité de LFP et LTO avec un rapport LFP/LTO en poids de 1 et des séparateurs papier Kodoshi ^{MC}. Les symboles pleins et vides sont utilisés pour représenter les résultats en charge et en décharge, respectivement.
La Figure 18 présente les résultats (A) de voltamétrie cyclique à une vitesse de balayage de 0.03 mV/s; et (B) de capacité en décharge et d'efficacité coulombique en fonction du nombre de cycles à des régimes entre C/24 et 5C, obtenus avec trois électrodes organiques autoportantes contenant un mélange de VGCFs-SOsH, de NTCs-SOsH et de différentes quantités de dianhydride pérylène-3,4,9,10-tétracarboxylique (PTCDA). Les symboles pleins et vides sont utilisés pour représenter les résultats d'efficacité coulombique (%) et de capacité en décharge, respectivement.

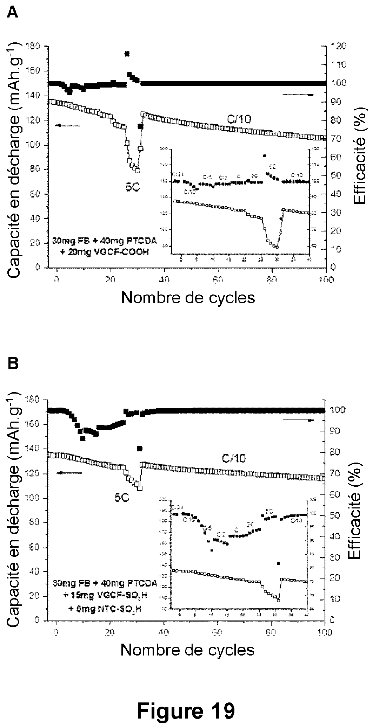

La Figure 19 présente les résultats de capacité en décharge et d'efficacité coulombique en fonction du nombre de cycles à un courant de charge/décharge constant de C/10 entre 1,5 et 3,5 V *vs* Li/Li+, obtenus avec deux électrodes organiques autoportantes contenant (A) du VGCFs-SOsH et du PTCDA; et (B) un mélange de VGCFs-SOsH, de NTCs-SOsH et de PTCDA. Les symboles pleins et vides sont utilisés pour représenter les résultats d'efficacité coulombique (%) et de capacité en décharge, respectivement. Les insertions dans (A) et (B) représentent les résultats de capacité de décharge à différents taux de C effectué avant l'expérience à long cyclage.

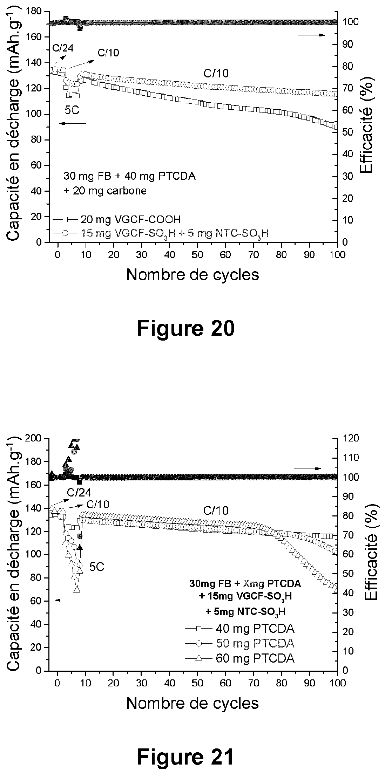

La Figure 20 présente les résultats de capacité en décharge et d'efficacité coulombique en fonction du nombre de cycles à un courant de charge/décharge constant de C/10 entre 1,5 et 3,5 V *vs* Li/Li+, obtenus avec deux électrodes de PTCDA autoportantes contenant du VGCFs-SOsH (carrés), et un mélange de VGCFs-SOsH et de NTCs-SOsH (cercles), respectivement. Les symboles pleins et vides sont utilisés pour représenter les résultats d'efficacité coulombique (%) et de capacité en décharge, respectivement.
La Figure 21 montre les résultats de capacité en décharge et d'efficacité coulombique en fonction du nombre de cycles à un courant de charge/décharge constant de C/10 entre 1,5 et 3,5 V *vs* Li/Li+, obtenus avec trois électrodes de PTCDA autoportantes contenant un mélange de VGCFs-SOsH et de NTCs-SOsH, et différentes quantités de PTCDA. Les symboles pleins et vides sont utilisés pour représenter les résultats d'efficacité coulombique (%) et de capacité en décharge, respectivement.

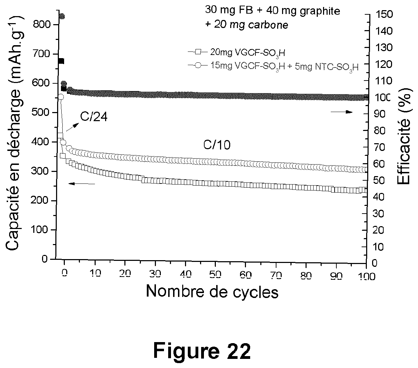

La Figure 22 montre les résultats de capacité en décharge et d'efficacité coulombique en fonction du nombre de cycles à un courant de charge/décharge constant de C/10 entre 0 et 1,5 V *vs* Li/Li+, obtenus avec deux électrodes de graphite, l'une contenant du VGCFs-SOsH (carrés), l'autre contenant un mélange de VGCFs-SOsH et de NTCs-SOsH (cercles). Les symboles pleins et vides sont utilisés pour représenter les résultats d'efficacité coulombique (%) et de capacité en décharge, respectivement.

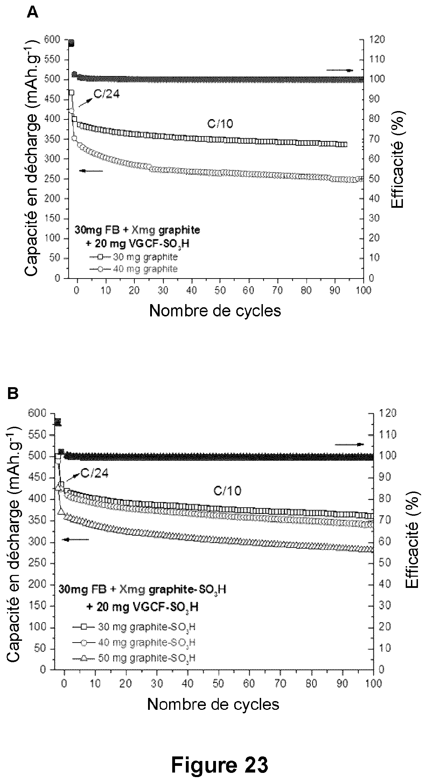

La Figure 23 présente les résultats de capacité en décharge et d'efficacité coulombique en fonction du nombre de cycles à un courant de charge/décharge constant de C/10 entre 0 et 1,5 V *vs* Li/Li+, obtenus avec (A) deux électrodes contenant du VGCFs-SOsH et 30 mg ou 40 mg de graphite, et (B) trois électrodes contenant du VGCFs-SOsH et 30 mg, 40 mg, ou 50 mg de graphite-SOsH. Les symboles pleins et vides sont utilisés pour représenter les résultats d'efficacité coulombique (%) et de capacité en décharge, respectivement.

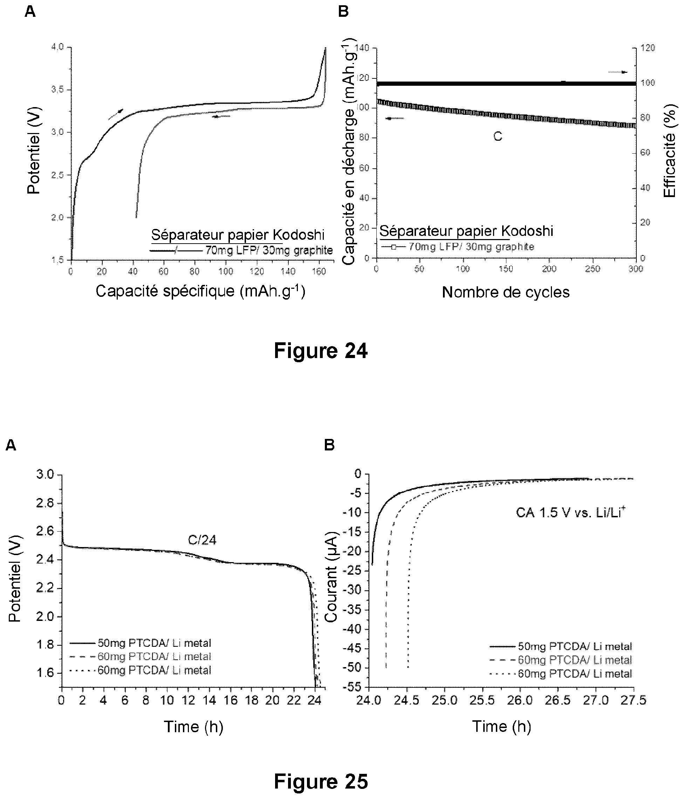

La Figure 24 montre (A) la première charge et décharge obtenue à un courant constant de C/24 entre 2 et 4 V *vs* graphite pour une batterie LFP/graphite utilisant des séparateurs papiers Kodoshi ^{MC} et un excédent d'anode en capacité; et (B) l'expérience de long cyclage correspondante effectuée à un régime de 1C. Les symboles pleins et vides sont utilisés en (B) pour représenter les résultats en charge et en décharge, respectivement.
La Figure 25 présente les résultats (A) de première décharge obtenue à un courant constant de C/24 du potentiel en circuit ouvert (OCP) à 1,5 V *vs* Li/Li+ pour trois batteries PTCDA/lithium métallique différentes comprenant différentes quantités de PTCDA; et (B) de chronoampérometrie effectuée directement après la première décharge pour ces trois batteries avec un potentiel fixé à 1,5 V *vs* Li/Li+ pendant 3 h.

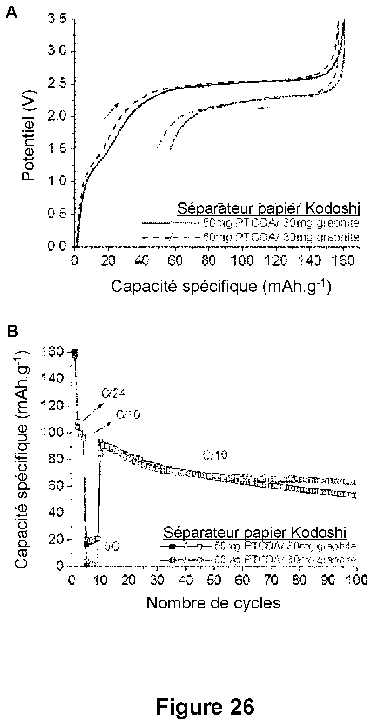

La Figure 26 présente les résultats (A) de première charge et décharge obtenus à un courant constant C/24 entre 1.5 et 3.5 V *vs* graphite pour deux batteries PTCDA/graphite prélithiées utilisant les séparateurs papiers Kodoshi^{MC} et un excès d'anode en capacité; et (B) d'une expérience de long cyclage correspondante effectuée sur les mêmes batteries à un régime de C/10 après une formation à 5C. Les symboles pleins et vides sont utilisés en (B) pour représenter les résultats en charge et en décharge, respectivement.

### DESCRIPTION DÉTAILLÉE

Tous les termes et toutes les expressions techniques et scientifiques utilisés ici ont les mêmes définitions que celles généralement comprises de la personne versée dans l'art de la présente technologie. La définition de certains des termes et expressions utilisés est néanmoins fournie ci-dessous.

Les termes « approximativement » et son équivalent « environ » tels qu'utilisés dans le présent document signifient dans la région de, et autour de. Par exemple, lorsque le terme « approximativement » ou « environ » est utilisé en lien avec une valeur numérique, il peut la modifier au-dessus et au-dessous par une variation de 10%, ou de 5%, par rapport à la valeur nominale. Ce terme peut aussi tenir compte, par exemple, de l'erreur expérimentale d'un appareil de mesure ou de l'arrondissement.

Si le terme « majoritairement » ou « principalement » est utilisé en lien avec une concentration dans le présent document, il signifie, à moins d'indication contraire, une concentration supérieure à 50% en volume ou en poids, selon si le terme est associé à une valeur nominale en volume ou en poids respectivement.

Les structures chimiques décrites ici sont dessinées selon les standards conventionnels. Aussi, lorsqu'un atome, comme un atome de carbone, tel que dessiné semble inclure une valence incomplète, la valence est alors supposée satisfaite par un ou plusieurs atomes d'hydrogène même s'ils ne sont pas nécessairement explicitement dessinés.

L'expression « électrode autoportante » telle qu'utilisée ici se réfère à une électrode sans collecteur du courant métallique.

L'expression « semiconducteur organique » tel qu'utilisée ici fait référence à des molécules ou des polymères à liaisons pi comprenant des atomes de carbone et des atomes d'hydrogène. La molécule ou le polymère peut en outre comprendre des hétéroatomes (tels que N, S et O).

Le terme « aryle » tel qu'ici utilisé désigne des cycles aromatiques substitués ou non substitués, les atomes contributeurs pouvant former un cycle ou une pluralité de cycles fusionnés. Des groupements aryles représentatifs comprennent les groupes comportant de 6 à 14 membres de cycle. Par exemple, l'aryle peut comprendre un phényle, un naphtyle, etc. Le cycle aromatique peut être substitué à une position du cycle ou plus avec, par exemple, un groupement carboxyle (-COOH) ou acide sulfonique (-SO₃H), un groupement amine, et autres groupes similaires.

L'expression « groupe fonctionnel hydrophile », telle qu'utilisée ici, désigne des groupements fonctionnels attirés par les molécules d'eau. Les groupements fonctionnels hydrophiles peuvent généralement être chargés et/ou capables de former des ponts hydrogène. Des exemples non limitatifs de groupements fonctionnels hydrophiles comprennent les groupes hydroxyle, acide carboxylique, acide sulfonique, acide phosphonique, amine, amide et autres groupes similaires. L'expression englobe en outre les sels de ces groupes, le cas échéant.

La présente demande décrit des électrodes autoportantes, par exemple, des électrodes autoportantes flexibles. La présente demande décrit aussi un procédé de filtration à base d'eau inspiré de l'industrie du papier pour la fabrication d'électrodes autoportantes. La présente demande décrit également l'utilisation ces électrodes autoportantes dans des cellules électrochimiques. Par exemple, la présente demande décrit l'utilisation d'électrodes autoportantes dans des batteries au lithium-ion (BLIs).

Les présentes électrodes autoportantes et leur procédé de fabrication excluent un ou plusieurs des éléments suivants: un collecteur de courant (par exemple, collecteur de courant en aluminium ou en cuivre), un liant coûteux ou un solvant nocif (par exemple, le N-méthyl-2-pyrrolidone (NMP)). Les électrodes autoportantes obtenues par le présent procédé peuvent également être recyclables.

Le procédé de la présente demande utilise de la cellulose non modifiée comme liant pour les électrodes autoportantes. La cellulose non modifiée est un polymère abondant, naturel et peu coûteux. De plus, le procédé de la présente demande est relativement simple, rapide, et facilement adaptable à la production industrielle. Par exemple, le présent procédé peut n'utiliser que de l'eau comme solvant.

Le présent procédé peut également impliquer la préparation de carbones solubles (dispersibles) dans l'eau pouvant accélérer la préparation et/ou faciliter la dispersion des matériaux d'électrode dans l'eau. Par exemple, une amélioration de la distribution de ces carbones modifiés dans l'électrode peut permettre l'amélioration des performances électrochimiques.

À titre d'exemples, une variété d'électrodes autoportantes flexibles, incluant des électrodes de LFP, de graphite, de dianhydride pérylène-3,4,9,10-tétracarboxylique (PTCDA), et de LTO possédant de bonnes résistances mécaniques ont été obtenues par le présent procédé. Les électrodes autoportantes de la présente demande demeurent substantiellement intactes (dans leur état d'origine), et ce même après le poinçonnage des électrodes autoportantes, après le cyclage et/ou même après l'ouverture des cellules électrochimiques. Les performances électrochimiques des présentes électrodes autoportantes positives et/ou négatives testées sont au moins similaires à celles communément rapportées pour des électrodes de LFP et/ou de LTO étendues sur des collecteurs de courant en métal (par exemple, collecteur de courant en aluminium ou en cuivre) suivant un procédé de fabrication traditionnel. Les cellules électrochimiques maintiennent généralement une bonne stabilité ainsi qu'une capacité spécifique substantiellement élevée, et ce même lors de cyclages à long terme.

La présente technologie se rapporte donc à une électrode autoportante comprenant :
- un premier matériau conducteur électronique servant de collecteur de courant, la surface dudit premier matériau conducteur électronique étant greffée avec au moins un groupement aryle de Formule I : 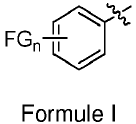 dans laquelle :
   FG est un groupement fonctionnel hydrophile; et
   n est un nombre entier naturel compris dans l'intervalle de 1 à 5, de préférence n est compris dans l'intervalle de 1 à 3, de préférence n est 1 ou 2, ou plus préférentiellement n est 1 ;
- un liant comprenant des fibres de cellulose;
- un matériau électrochimiquement actif; et
- éventuellement un deuxième matériau conducteur électronique;
dans laquelle :
l'électrode autoportante est constituée d'un film solide ayant une première et une deuxième surface;
la concentration du premier matériau conducteur électronique augmente de la deuxième surface à la première surface du film solide; et
la concentration du matériau électrochimiquement actif, et éventuellement du deuxième matériau conducteur électronique, augmente de la première surface à la deuxième surface du film solide.

Selon un exemple, la première surface comprend principalement le premier matériau conducteur électronique. Le premier matériau conducteur électronique peut comprendre des fibres de carbone, comme des fibres de carbone formées en phase gazeuse (VGCFs).

Des exemples de groupement fonctionnel hydrophile incluent les groupes hydroxyle, acide carboxylique, acide sulfonique, acide phosphonique, amine, amide et autres groupes similaires. Par exemple, le groupement fonctionnel hydrophile est un groupement fonctionnel acide carboxylique ou acide sulfonique. Des exemples préférentiels de groupement aryle de Formule I sont l'acide p-benzoïque ou l'acide p-benzènesulfonique.

Le liant comprend des fibres de cellulose, en particulier des fibres de cellulose non modifiées. Par exemple, les fibres de cellulose non modifiées ne contiennent pas de cations d'aluminium. Comme décrit précédemment, les fibres de cellulose conventionnelles sont souvent modifiées avec du sulfate d'aluminium hydraté en tant qu'adjuvant, neutralisant ainsi la charge négative présente sur les fibres de cellulose par des cations d'aluminium. Les fibres de cellulose de la présente demande ne sont pas modifiées avec du sulfate d'aluminium hydraté, car ce composé peut possiblement réagir à l'intérieur des batteries, par exemple, lors du cyclage.

Selon un exemple, la longueur moyenne des fibres de cellulose est comprise entre 5 nm et 5 mm, ou entre 250 nm et 3 mm, ou entre 500 nm et 3 mm, ou entre 1 µm et 3 mm, ou entre 100 µm et 3 mm, ou entre 250 µm et 3 mm, ou entre 500 µm et 3 mm, ou entre 750 µm et 2,5 mm, ou encore entre 1 mm et 2,5 mm.

La deuxième surface de la présente électrode autoportante comprend principalement le matériau électrochimiquement actif et, éventuellement, le deuxième matériau conducteur électronique.

Selon un exemple, le matériau électrochimiquement actif peut être sous forme de particules. Selon un autre exemple, le matériau électrochimiquement actif peut être sous forme de particules enrobées d'une couche de carbone dans une configuration de type noyau-enrobage (*core-shell*)*.*

La couche de carbone peut aussi être éventuellement greffée avec au moins un groupement aryle de Formule I.

Des exemples non limitatifs de matériau électrochimiquement actifs comprennent des matériaux tels qu'un phosphate de métal, phosphate de métal lithié, oxyde de métal, et oxyde de métal lithié, par exemple, le métal est un métal de transition choisi parmi Ti, Fe, Mn, V, Ni, Co et leurs combinaisons. Par exemple, le matériau électrochimiquement actif comprend un phosphate de métal lithié ou non (par exemple, LiM'PO₄ et M'PO₄ où M' est Fe, Ni, Mn, Co ou une de leurs combinaisons), un oxyde de vanadium (par exemple, LiV₃O₈, V₂O₅, LiV₂O₅, etc.), d'autres oxydes de métal lithiés tels que LiMn₂O₄, LiM"O₂ (M" étant Mn, Co, Ni ou une combinaison de celles-ci), Li(NiM‴)O₂ (M‴ étant Mn, Co, Al, Fe, Cr, Ti, Zr et autres similaires, ou une combinaison de ceux-ci), un titanate ou titanate de lithium (par exemple, TiO₂, Li₂TiO₃, Li₄Ti₅O₁₂, H₂Ti₅O₁₁, H₂Ti₄O₉ ou une combinaison de ceux-ci), ou une combinaison de deux ou plus des matériaux ci-dessus lorsque compatibles. Lorsque l'électrode autoportante est une électrode positive, le matériau électrochimiquement actif peut, par exemple, comprendre des particules de phosphate de métal lithié (tel que LiFePO₄, aussi appelé LFP). Lorsque l'électrode autoportante est une électrode négative, le matériau électrochimiquement actif peut, par exemple, comprendre des particules de titanate de lithium (tel que Li₄Ti₅O₁₂, aussi appeleé LTO).

Selon une variante, le matériau électrochimiquement actif peut être un matériau à base de carbone tel que le graphène ou le graphite. Selon une autre variante, le matériau électrochimiquement actif peut également être un matériau actif organique tel qu'un matériau d'électrode comprenant un matériau actif de type polymère ou polyaromatique. Par exemple, le matériau actif organique peut être un semi-conducteur organique.

Des exemples non limitatifs de matériau actif organique comprennent les polymères à base de dianhydride tels que le dianhydride pyromellitique (PMDA), le dianhydride naphtalène-1,4,5,8-tétracarboxylique (NTCDA) et le dianhydride pérylène-3,4,9,10-tétracarboxylique (PTCDA). Selon une variante d'intérêt, le matériau actif organique à base de dianhydride est le PTCDA. Le PTCDA peut, par exemple, être choisi pour son faible coût ou pour sa capacité théorique de 273 mAh/g.

Selon un exemple, le polymère à base de dianhydride peut être de Formule III(a), III(b) ou III(c) :

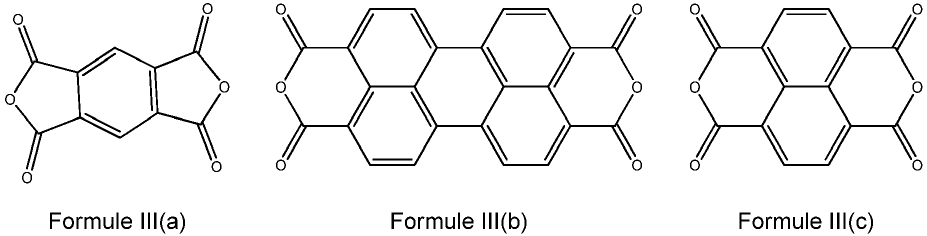

Par exemple, les performances électrochimiques (capacité et efficacité coulombique) obtenues avec les électrodes positives autoportantes comprenant le PTCDA sont nettement améliorées par rapport à celles communément rapportées pour les électrodes positives de PTCDA et ce, pour des charges en matériau électrochimiquement actif inférieures (voir Sharma, P. et al., The Journal of Physical Chemistry Letters 4.19 (2013): 3192-3197).

Selon un autre exemple, le matériau actif organique peut comprendre un dérivé de quinone, comme une anthraquinone.

Selon un autre exemple, le deuxième matériau conducteur électronique est optionnellement greffé avec au moins un groupement aryle de Formule I.

Des exemples non limitatifs de deuxième matériau conducteur électronique comprennent le noir de carbone (tel que le carbone Ketjen^{MC}), le noir d'acétylène (tel que le carbone Shawinigan et le carbone Denka^{MC}), le graphite, le graphène, les fibres de carbone (telles les nanofibres de carbone ou les VGCFs), et les nanotubes de carbone (NTCs), ou une combinaison d'au moins deux de ceux-ci. Le deuxième matériau conducteur électronique peut comprendre au moins l'un des matériau choisis parmi le noir d'acétylène (tel que le carbone Denka^{MC}), les fibres de carbones (VGCFs), les nanotubes de carbone, et leurs combinaisons. Par exemple, le deuxième matériau conducteur électronique comprend des VGCFs, une combinaison de VGCFs et de carbone Denka^{MC} ou une combinaison de VGCFs et de NTCs. Selon une variant d'intérêt, lorsque les VGCFs sont présents en combinaison avec un autre matériau conducteur électronique (par exemple NTCs ou Denka^{MC}), les VGCFs sont présents dans la combinaison à une concentration de 50% en poids ou plus.

Selon un deuxième aspect, la présente technologie concerne un procédé pour la production d'électrodes autoportantes, le procédé comprenant les étapes suivantes :
(a) greffer au moins un groupement aryle de Formule I sur un premier matériau conducteur électronique;
(b) disperser le premier matériau conducteur électronique modifié obtenu à l'étape (a) dans un mélange aqueux comprenant des fibres de cellulose pour obtenir une première dispersion aqueuse;
(c) filtrer la première dispersion aqueuse sur une membrane filtrante pour obtenir un film;
(d) disperser un matériau électrochimiquement actif et éventuellement un deuxième matériau conducteur électronique, dans un milieu aqueux pour obtenir une deuxième dispersion aqueuse;
(e) filtrer la deuxième dispersion aqueuse sur le film obtenu à l'étape (c) pour produire une électrode autoportante sur la membrane filtrante; et
(f) décoller l'électrode autoportante de la membrane filtrante.

Selon un exemple, le greffage d'un groupement aryle sur un matériau conducteur électronique peut être effectué tel qu'illustré au Schéma 1 :

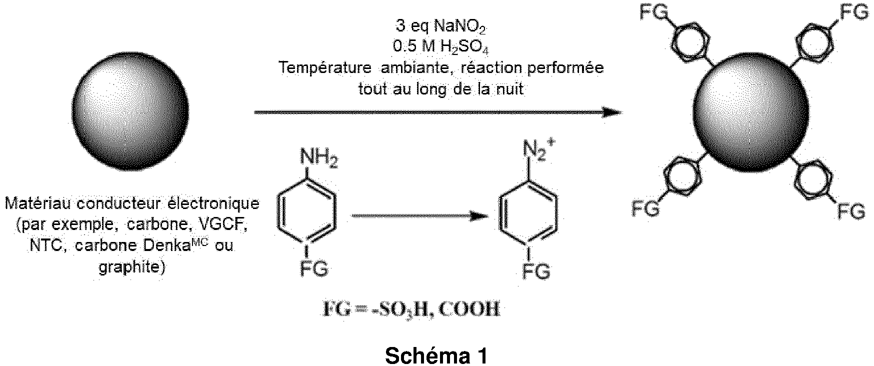

Selon un exemple, le greffage d'un groupement aryle sur une couche de carbone présente à la surface du matériau électrochimiquement actif peut être effectué tel qu'illustré au Schéma 2 :

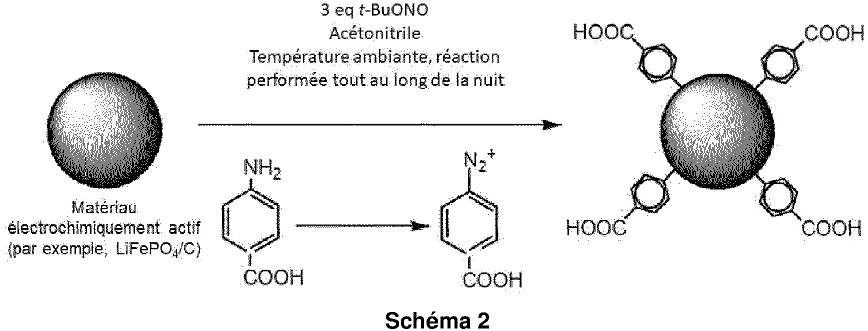

Le Schéma 2 utilise à titre d'illustration un groupement COOH comme groupement fonctionnel hydrophile (FG), mais il est entendu que le procédé s'applique également aux autres groupements fonctionnels hydrophiles.

Selon un exemple, le procédé comprend en outre une étape de greffage d'au moins un groupement aryle de Formule I sur le deuxième matériau conducteur électronique avant l'étape (d). Le greffage d'un groupement aryle de Formule I sur le matériau conducteur électronique peut être effectué tel qu'illustré au Schéma 1.

De manière générale, les étapes de greffage du procédé comprennent :
(i) la génération d'un ion aryle diazonium à partir d'une aniline de Formule II: 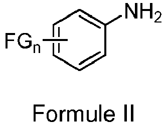 dans laquelle FG et n sont tels qu'ici définis, en présence d'un agent de diazotation; et
(ii) la réaction des ions aryle diazonium générés à l'étape (i) avec une couche de carbone à la surface du matériau électrochimiquement actif, ou avec le premier ou le deuxième matériau conducteur électronique.

Selon une variante, l'ion aryle diazonium est généré *in situ,* c'est-à-dire que l'étape (i) est réalisée en présence de la couche de carbone du matériau électrochimiquement actif ou alternativement du premier ou deuxième matériau conducteur électronique de l'étape (ii). Dans cette variante, l'ion diazonium réagit, au fur et à mesure de sa formation, avec le carbone de la couche de carbone ou, alternativement, du premier ou deuxième matériau conducteur électronique. Selon une autre variante, l'ion aryle diazonium peut également être généré avant l'addition du matériau électrochimiquement actif, ou du premier ou deuxième matériau conducteur électronique. Selon une troisième variante, l'ion diazonium peut être généré avant son addition au matériau électrochimiquement actif ou au premier ou deuxième matériau conducteur électronique.

La quantité d'agent de diazotation utilisée peut être située dans l'intervalle de 1 à 4 équivalents molaires, de préférence à environ 3 équivalents molaires, par rapport à l'aniline. Dans un exemple, la quantité d'agent de diazotation utilisée peut être située dans l'intervalle de 0,01 à 0,04 équivalent par rapport au carbone. Par exemple, l'agent de diazotation est un sel de nitrite ou un nitrite d'alkyle. Lorsque l'étape de greffage est effectuée sur le premier ou le deuxième matériau conducteur électronique, l'agent de diazotation peut être un sel de nitrite, par exemple, du nitrite de sodium (NaNO₂). Alternativement, lorsque l'étape de greffage est effectuée sur la couche de carbone du matériau électrochimiquement actif, l'agent de diazotation peut être un nitrite d'alkyle, par exemple, le nitrite de tert-butyle (t-BuONO).

Selon un exemple, lorsque l'étape de greffage est effectuée sur le premier ou le deuxième matériau conducteur électronique, elle peut être effectuée dans un milieu aqueux acide. Par exemple, le milieu aqueux acide peut être une solution aqueuse d'acide sulfurique (H₂SO₄).

Selon un exemple, lorsque l'étape de greffage est effectuée sur la couche de carbone à la surface du matériau électrochimiquement actif, elle peut être effectuée dans un solvant polaire aprotique tel que l'acétonitrile.

Le film obtenu à l'étape (c) comprend un côté riche en premier matériau conducteur électronique et un côté riche en fibres de cellulose, le côté riche en premier matériau conducteur électronique faisant face à la membrane filtrante.

Selon une variante, le procédé comprend en outre une étape de séchage du film obtenu à l'étape (c).

Selon un autre exemple, le matériau électrochimiquement actif est sous forme de particules enrobées d'une couche de carbone et le procédé comprend en outre une étape de greffage d'au moins un groupement aryle de Formule I sur ladite couche de carbone avant l'étape (d).

Selon un autre exemple, le procédé comprend en outre une étape de calandrage de l'électrode autoportante. Par exemple, l'étape de calandrage peut être réalisée à une température comprise entre la température ambiante et environ 80 °C, par exemple, dans l'intervalle allant d'environ 25 °C à environ 80 °C. Par exemple, l'étape de calandrage peut être réalisée à la température ambiante. Alternativement, l'étape de calandrage peut être réalisée à une température située dans l'intervalle allant d'environ 50 °C à environ 80 °C.

Selon un autre exemple, le procédé comprend en outre une étape de production d'un séparateur par filtration d'un mélange aqueux comprenant des fibres de cellulose directement sur l'électrode autoportante produite à l'étape (e), l'étape de production d'un séparateur étant alors généralement réalisée avant l'étape (f).

Selon un troisième aspect, la présente technologie concerne une cellule électrochimique comprenant une électrode négative, une électrode positive et un électrolyte, dans laquelle au moins l'une des électrodes négative et positive est une électrode autoportante telle qu'ici définie. Alternativement, l'électrode négative et l'électrode positive sont toutes deux des électrodes autoportantes telles qu'ici définies.

Selon un autre exemple, la cellule électrochimique comprend en outre un séparateur. Des exemples non limitatifs de séparateurs peuvent comprendre des membranes de polyéthylène (PE), de polypropylène (PP), de cellulose, de polytétrafluoroéthylène (PTFE), de poly(fluorure de vinylidène) (PVdF), ou de polypropylène-polyéthylène-polypropylène (PP/PE/PP). Selon une variante d'intérêt, le séparateur est un séparateur en PP ou en PP/PE/PP (par exemple, un séparateur développé par Celgard ^{MC}) ou un séparateur cellulosique (par exemple, un séparateur préparé selon la présente méthode ou un séparateur de papier commercialisé par Nippon Kodoshi Corporation).

Selon une variante, le séparateur est un séparateur cellulosique produit en filtrant un mélange aqueux comprenant des fibres de cellulose directement sur le côté riche en matériau électrochimiquement actif de l'électrode autoportante.

L'électrolyte est habituellement choisi pour sa compatibilité avec les différents éléments de la cellule électrochimique. Tout type d'électrolyte est envisagé, par exemple, les électrolytes liquides, gels ou solides. Par exemple, l'électrolyte peut être un électrolyte liquide comprenant un sel de lithium dans un solvant. Alternativement, l'électrolyte peut être un électrolyte gel comprenant un sel de lithium dans un solvant et/ou un polymère solvatant. Selon une autre alternative, l'électrolyte peut être un électrolyte polymère solide comprenant un sel de lithium dans un polymère solvatant.

Des exemples non limitatifs de sels de lithium peuvent comprendre l'hexafluorophosphate de lithium (LiPF₆), le bis(trifluorométhanesulfonyl)imidure de lithium (LiTFSI), le bis(fluorosulfonyl)imidure de lithium (LiFSI), le 2-trifluorométhyl-4,5-dicyano-imidazolate de lithium (LiTDI), le 4,5-dicyano-1,2,3-triazolate de lithium (LiDCTA), le bis (pentafluoroéthylsulfonyl)imidure de lithium (LiBETI), le tétrafluoroborate de lithium (LiBF₄), le bis(oxalato)borate de lithium (LiBOB), le nitrate de lithium (LiNO₃), le chlorure de lithium (LiCl), le bromure de lithium (LiBr), le fluorure de lithium (LiF), le perchlorate de lithium (LiClO₄), l'hexafluoroarsénate de lithium (LiAsF₆), le trifluorométhanesulfonate de lithium (LiSO₃CF₃) (LiTf), le fluoroalkylphosphate de lithium Li[PF₃(CF₂CF₃)₃] (LiFAP), le tétrakis(trifluoroacétoxy)borate de lithium Li[B(OCOCF₃)₄] (LiTFAB), le bis[1,2-benzènediolato(2-)-O,O']borate de lithium Li[B(CₑO₂)₂] (LBBB) et leurs combinaisons. Selon une variante, le sel de lithium est l'hexafluorophosphate de lithium (LiPF₆).

Par exemple, le solvant est un solvant non aqueux. Des exemples non limitatifs de solvants non aqueux peuvent comprendre les carbonates cycliques tels que le carbonate d'éthylène (EC), le carbonate de propylène (PC), le carbonate de butylène (BC), et le carbonate de vinylène (VC); les carbonates acycliques tels que le carbonate de diméthyle (DMC), le carbonate de diéthyle (DEC), le carbonate de méthyle et d'éthyle (EMC), et le carbonate de dipropyle (DPC); les lactones telles que la γ-butyrolactone (γ-BL) et la γ-valérolactone (γ-VL); les éthers acycliques tels que le 1,2-diméthoxyéthane (DME), le 1,2-diéthoxyéthane (DEE), le triméthoxyméthane, et l'éthoxyméthoxyéthane (EME); les éthers cycliques tels que le 2-méthyltétrahydrofurane, le 1,3-dioxolane, et leurs dérivés; les amides tels que le formamide, l'acétamide, et le diméthylformamide; et d'autres solvants organiques tels que le diméthylsulfoxyde, l'acétonitrile, le propylnitrile, le nitrométhane, le triester d'acide phosphorique, les dérivés de le sulfolane, le méthylsulfolane, et leurs mélanges. Selon une variante d'intérêt, le solvant non aqueux est un mélange de carbonate d'éthylène (EC)/carbonate de diéthyle (DEC) (par exemple à 3:7 en volume).

Selon un quatrième aspect, la présente technologie concerne une batterie comprenant au moins une cellule électrochimique telle qu'ici définie. Par exemple, la batterie est une batterie au lithium-ion.

Selon un cinquième aspect, la présente technologie concerne des batteries entièrement organiques comprenant par exemple une électrode positive organique autoportante et une électrode négative organique autoportante. Par exemple, la batterie entièrement organique comprend une électrode positive autoportante comprenant du PTCDA et une électrode négative autoportante comprenant du graphite.

Des batteries entièrement organiques (sans métal de transition) comprenant une électrode positive autoportante avec PTCDA et une électrode négative autoportante avec graphite, ont été préparées et testées électrochimiquement. Ces batteries entièrement organiques (PTCDA/graphite) comprennent des molécules d'oxydoréduction organiques et des composantes biodégradables. La présente technologie démontre donc le concept de batteries peu coûteuses et biodégradables.

Selon un sixième aspect, la présente technologie concerne le recyclage des électrodes autoportantes telles qu'ici définies en utilisant un processus essentiellement écologique. Une batterie à base de matériaux recyclés est aussi ici envisagée.

### EXEMPLES

Les exemples non limitatifs suivants sont à titre illustratif et ne doivent pas être interprétés comme limitant davantage la portée de la présente invention. Ces exemples seront mieux compris en se référant aux Figures annexées.

### Exemple 1 : Préparation d'électrodes autoportantes

### (a) Préparation d'un mélange aqueux comprenant des fibres de cellulose

Un mélange aqueux comprenant des fibres de cellulose a été préparé en dispersant 400 mg fibres de pulpe Södra^{MC} black R dans 200 ml d'eau déionisée et en mélangeant vigoureusement à l'aide d'un disperseur ULTRA-TURRAX^{MC} pendant environ 15 minutes. À titre d'information, les fibres de pulpe Södra^{MC} black R comprennent des fibres de cellulose non modifiée ayant une longueur comprise dans l'intervalle de 2,05 à 2,25 mm.

Le mélange a ensuite été refroidi à la température ambiante et 200 ml d'eau désionisée ont ensuite été ajoutés pour obtenir un mélange aqueux comprenant des fibres de cellulose à une concentration d'environ 1 g de fibres de cellulose par litre du mélange.

### (b) Préparation de carbones solubles dans l'eau (carbones modifiés)

Le procédé suivant pour la production de carbones solubles dans l'eau a été appliqué à des fibres de carbone développées en phase vapeur (des VGCFs), des nanotubes de carbone (NTCs), du noir d'acétylène de type Denka^{MC}, et du graphite. Le terme carbone est utilisé dans la procédure ci-dessous pour désigner l'une ou l'autre de ces matériaux.

5 g de carbone ont été dispersés dans 200 ml d'une solution aqueuse d'acide sulfurique (H₂SO₄) 0,5 M, puis 0,01 équivalent d'aniline *p*-substituée par un substituant hydrophile (-SO₃H ou - COOH) a été ajouté au mélange (soit 0,01 équivalent d'aniline par rapport au carbone). Le mélange a ensuite été agité vigoureusement jusqu'à dissolution complète de l'amine.

Après une addition de 0,03 équivalent de nitrite de sodium (NaNO₂) par rapport au carbone (par exemple, 3 équivalents de NaNO₂ par rapport à l'aniline), l'ion aryle diazonium correspondant a été généré *in situ* et a réagi avec le carbone. Le mélange ainsi obtenu a été laissé à réagir pendant toute la nuit à température ambiante.

Une fois la réaction terminée, le mélange a été filtré sous vide en utilisant un montage de filtration sous vide (de type Büchner) et un filtre en nylon ayant une taille de pores de 0,22 µm. La poudre de carbone modifié ainsi obtenue a ensuite été lavée de manière successive avec de l'eau désionisée jusqu'à l'atteinte d'un pH neutre, puis avec de l'acétone. Finalement, la poudre de carbone modifié a ensuite été séchée sous vide à 100°C pendant au moins un jour avant son utilisation.

### (c) Préparation de particules greffées hydrophiles de C-LiFePO₄ (C-LFP modifié)

Typiquement, 5 g de LiFePO₄ enrobé de carbone (2-3 % en poids de carbone) ont été dispersés dans 200 ml d'acétonitrile, puis 0,01 équivalent de l'aniline p-substituée par un substituant hydrophile -COOH a été ajouté au mélange (soit 0,01 équivalent d'aniline par rapport au carbone). Par la suite, le mélange a été agité vigoureusement jusqu'à dissolution complète de l'amine. Après une addition de 0,03 équivalent de nitrite de tert-butyle (*t*-BuONO) par rapport au carbone, l'ion aryle diazonium correspondant a été formé *in situ* et a réagi avec l'enrobage de carbone. Le mélange ainsi obtenu a été laissé à réagir pendant toute la nuit à température ambiante.

Une fois la réaction terminée, le mélange a été filtré sous vide en utilisant un montage de type Büchner et un filtre en nylon avec une taille de pores de 0,22 µm. La poudre de particules modifiées ainsi obtenue a ensuite été lavée successivement avec du N,N-diméthylformamide (DMF) et de l'acétone. Finalement, la poudre de particules C-LFP modifiées a été séchée sous vide à 100°C pendant au moins un jour avant son utilisation.

### (d) Préparation d'électrodes autoportantes

Les électrodes autoportantes ont été préparées telles qu'illustrées à la Figure 1. Un volume du mélange aqueux comprenant des fibres de cellulose telle que décrite à l'Exemple 1(a) correspondant à environ 30 mg de fibres de cellulose a été ajouté dans un bécher. 10 mg de fibres de carbone VGCFs non modifiées, ou de VGCFs-SO₃H ou encore de VGCFs-COOH, telles que décrites à l'Exemple 1(b), ont ensuite été ajoutés au bécher et dispersées dans le mélange aqueux comprenant des fibres de cellulose afin d'obtenir une première dispersion aqueuse. La première dispersion aqueuse a ensuite été agitée en utilisant une tige à ultrasons. Les poudres de VGCFs hydrophiles greffées VGCFs-SOsH et VGCFs-COOH ont été solubilisées instantanément dans le mélange aqueux alors que les fibres de carbone VGCFs non modifiées commerciales ont pris au moins 10 minutes pour se solubiliser. Une fois homogène, la première dispersion aqueuse a été filtrée à l'aide d'un montage de type Büchner et d'une membrane filtrante en nylon ayant des pores d'une taille de 0,22 µm et un film flexible a été obtenu (voir la Figure 2(C)). Par exemple, le côté riche en matériau conducteur électronique du film obtenu (voir la Figure 2(A)) peut servir de collecteur de courant. L'autre face du film obtenu est un côté riche en fibres de cellulose (voir la figure 2 (B)). Le côté riche en matériau conducteur électronique fait face à la membrane filtrante lors de la filtration du mélange. Le film obtenu a ensuite été séché pendant 10 minutes.

Une quantité comprise entre 40 et 70 mg de matériau électrochimiquement actif (LFP, PTCDA ou LTO) a été dispersée dans environ 50 ml d'eau désionisée. Dans le cas du PTCDA, comme il est soluble dans l'eau, la préparation des électrodes positives autoportantes à base de PTCDA s'est effectuée simplement et le PTCDA s'est retrouvé fortement piégé à l'intérieur du substrat de cellulose et de VGCFs.

10 mg d'un deuxième matériau conducteur électronique modifié ou non modifié (VGCFs, Denka ^{MC}, et NTCs modifiés ou non, ou leurs combinaisons) ont ensuite été ajoutés à la dispersion aqueuse. Encore une fois, les carbones hydrophiles greffés et les particules de LiFePO₄ enrobées de carbones hydrophiles greffés étaient plus facilement et plus rapidement dispersés dans l'eau. La dispersion aqueuse a ensuite été agitée, versée directement sur le film préalablement préparé dans le montage Büchner et filtrée afin d'obtenir une électrode autoportante sur la membrane filtrante.

L'électrode autoportante a ensuite été décollée de la membrane filtrante. L'électrode autoportante a ensuite été calandrée à température ambiante, à 50 °C ou encore à 80 °C. L'électrode autoportante ainsi obtenue a ensuite été placée dans un four sous vide à une température de 130 °C pendant au moins un jour avant son utilisation dans une pile. La Figure 3 montre une électrode de LFP telle que préparée dans cet exemple. La Figure 3(A) montre le côté riche en matériau conducteur électronique qui reste brillant tandis que la figure 3(B) montre le matériau électrochimiquement actif (LFP) remplissant les pores du côté riche en fibres de cellulose (opposé au côté riche en VGCFs). La Figure 3(C) montre que le film est demeuré intact et résistant même après le poinçonnage d'une petite électrode.

### (e) Préparation de séparateurs de papier

Optionnellement, un séparateur de papier peut être préparé directement sur l'électrode autoportante. Un volume d'un mélange aqueux comprenant des fibres de cellulose préparé selon l'Example 1(a) et correspondant à environ 30 mg de fibres de cellulose est filtré directement sur le côté riche en matériau électrochimiquement actif de l'électrode autoportante avant l'étape de décollage de l'électrode autoportante de la membrane filtrante. La Figure 3(D) montre un film comprenant une électrode autoportante et un séparateur tel qu'ici défini comprenant un côté riche en VGCFs servant de collecteur de courant, une électrode de LFP intégrée et un séparateur de papier.

### Exemple 2: Caractérisation physique des films et des électrodes autoportantes

Les films tels que décrits à l'Exemple 1(d) avaient une épaisseur d'environ 100 µm. Le calandrage des films autoportants a réduit leur épaisseur. En fait, une diminution moyenne de 20 et 30% de l'épaisseur a été observée lorsque les électrodes autoportantes ont été calandrées à une température de 50 et 80 °C, respectivement. Les films étaient flexibles, pliables, enroulables et résistants comme le montre la Figure 2.

La Figure 3(C) montre que le fait de poinçonner une électrode dans le film d'électrode autoportante n'en a pas substantiellement affecté l'intégrité. Comme démontré à la Figure 3(A), le côté riche en matériau conducteur électronique (Figure 2(A)) obtenu lors de la première étape de fabrication est resté substantiellement inchangé après l'étape de filtration du mélange contenant le matériau électrochimiquement actif. Tel qu'illustré sur la Figure 2(B), les pores du côté riche en fibres de cellulose ont été remplis par le matériau électrochimiquement actif et par le deuxième matériau conducteur électronique au cours de la deuxième étape de filtration.

L'électrode autoportante obtenue consiste en un film solide à base de cellulose ayant deux surfaces. L'une des deux surfaces comprend principalement le premier matériau conducteur électronique et l'autre surface comprend principalement le matériau électrochimiquement actif et le deuxième matériau conducteur électronique.

Le procédé décrit à l'Exemple 1(d) est très intéressant, car les collecteurs de courant en métal sont remplacés par du carbone servant de collecteur de courant. Le poids des collecteurs de courant en métal peut, par exemple, être remplacé par plus de fibres de cellulose ou de carbone ou les deux afin d'obtenir un film plus solide avec une teneur en carbone supérieure à celle d'un film étendu sur un collecteur de courant métallique. En fait, pour une électrode (~ 6 mg de matériau électrochimiquement actif / cm²) étendue sur une feuille d'aluminium, le matériau électrochimiquement actif (par exemple, le LFP) représente 53% en poids, le liant et le matériau conducteur électronique représentant environ 6% en poids, tandis que la feuille d'aluminium inactive représente 41% en poids du poids total de l'électrode.

Un autre avantage du procédé décrit à l'Exemple 1(d) est le fait que la quantité de matériau électrochimiquement actif peut être parfaitement connue puisqu'elle est pesée avant d'être ajoutée au bécher et filtrée (voir la figure 1). Par conséquent, en fonction de la configuration de la batterie ou des matériaux de cathode / anode utilisés, la quantité de matériau actif en mg/cm² dans le film autoportant peut être relativement facilement adaptée.

### Exemple 3: Préparation des cellules électrochimiques

Toutes les cellules électrochimiques ont été assemblées dans une boîte à gants remplie d'argon avec une teneur en oxygène inférieure à 20 ppm, puis contrôlées avec un potentiostat VMP₃.

Des piles boutons de type LR2032 comprenant deux électrodes ont été assemblées avec du lithium métallique comme contre électrode et comme électrode de référence et un séparateur Celgard^{MC}-3501 ou un séparateur de papier Kodoshi^{MC} imprégné d'un électrolyte liquide comprenant du LiPF₆ à 1M dans un mélange EC:DEC (3:7 en volume).

Des batteries complètes comprenant un film autoportant d'électrode positive et un film autoportant d'électrode négative (LFP / LTO ou PTCDA / graphite) ont été assemblées avec des séparateurs Celgard^{MC}-3501 ou des séparateurs de papier Kodoshi^{MC} imprégnés d'un électrolyte liquide comprenant du LiPF₆ à 1M dans un mélange EC:DEC (3:7 en volume).

Toutes les électrodes ont été poinçonnées en petits disques circulaires (surface = 1,13 cm², voir Figure 2(C)) ayant une charge allant de 8,4 à 11,2 mg/cm² en fonction de la quantité de matériau électrochimiquement actif insérée dans le film.

Des électrodes nues ou de référence ont également été testées en utilisant une cale (espaceur) en acier inoxydable comme électrode de travail.

Afin de vérifier l'inertie électrochimique des fibres de cellulose, des électrodes en papier faites à la main ont été testées avec du lithium comme électrode de travail et un séparateur Celgard^{MC}-3501 ou un séparateur de papier Kodoshi^{MC} imprégné d'un électrolyte liquide comprenant du LiPF₆ à 1M dans un mélange EC:DEC (3:7 en volume).

### Exemple 4: Propriétés électrochimiques

### (a) Conditions expérimentales de voltamétrie cyclique

Les propriétés électrochimiques de l'électrode de référence (cale en acier inoxydable seule), de l'électrode en papier (composée de fibres de cellulose) et des électrodes autoportantes de LFP, PTCDA et LTO ont été comparées par voltamétrie cyclique. Une vitesse de balayage de 0,03 mV.s⁻¹ a été utilisée entre différentes fenêtres potentielles.

Pour l'électrode de référence (cale en acier inoxydable seule) et pour l'électrode en papier (composée de fibres de cellulose), le potentiel a été balayé du potentiel en circuit ouvert (OCP) à 4,2 V, suivi d'un balayage inverse de 4,2 V à 2,0 V *vs* Li/Li+.

Pour les électrodes autoportantes de LFP, le potentiel a été balayé du potentiel en circuit ouvert (OCP) à 4,0 V, suivi d'un balayage inversé de 4,0 V à 2,0 V *vs* Li/Li+.

Pour les électrodes autoportantes de PTCDA, le potentiel a été balayé du potentiel en circuit ouvert (OCP) à 1,5 V suivi d'un balayage inversé de 1,5 V à 3,5 V *vs* Li/Li+.

Pour les électrodes autoportantes de LTO, le potentiel a été balayé du potentiel en circuit ouvert (OCP) à 1,2 V suivi d'un balayage inversé de 1,2 V à 2,5 V *vs* Li/Li+.

### (b) Conditions expérimentales de cyclage galvanostatique et de cyclage à long terme

Les cycles de charge et de décharge ont été réalisés en mode galvanostatique à différentes densités de courant entre 2,0 et 4,0 V, entre 1,5 à 3,5 V, entre 0 à 1,5 V et entre 1,2 à 2,5 V *vs* Li/Li+ respectivement pour les électrodes de LFP, PTCDA, graphite et LTO. Cinq cycles ont été enregistrés pour chaque vitesse de cyclage allant de C/10 à 5C et l'expérience a automatiquement été démarrée avec deux cycles de formation à C/24.

De plus, des cellules électrochimique LFP/LTO avec des ratios en poids LFP/LTO allant de 1 à environ 0,85 ont également été testées entre 1,0 et 2,5 V *vs* LTO à différentes vitesses de cyclage allant de C/24 à 5C.

Des tests de cyclage à long terme à des vitesses de cyclage C/10, C/2, C et 2C ont également été performés à différentes vitesses de cyclage pour des cellules électrochimiques PTCDA/Li, graphite/Li, LTO/Li, LFP/LTO, LFP/LTO, ainsi que des batteries LFP/graphite et PTCDA/graphite directement après deux cycles de formation à C/24.

La prélithiation des cathodes de PTCDA a été réalisée dans des piles boutons à l'aide d'électrodes négatives au lithium en effectuant une décharge à C/24 à partir du potentiel en circuit ouvert (OCP) jusqu'à 1,5 V *vs* Li/Li+ suivi d'une expérience de chronoampérométrie à un potentiel constant de 1,5 V d'une durée de 3 heures. Les piles boutons ont été désassemblées et les électrodes positives de PTCDA prélithiées ont été récupérées pour être assemblées avec des électrodes négatives en graphite.

### (c) Résultats électrochimiques

Tous les voltammogrammes cycliques ont été enregistrés en utilisant les conditions expérimentales décrites à l'Exemple 3(a) et toutes les expériences de cyclage galvanostatique et de cyclage à long terme ont été enregistrées en utilisant les conditions expérimentales décrites à l'Exemple 3(b).

### i. Propriétés électrochimiques de l'électrode de référence (cale en acier inoxydable seule) et de l'électrode en papier (composée de fibres de cellulose)

Afin de vérifier que les fibres de cellulose non modifiées peuvent être utilisées comme support pour le matériau électrochimiquement actif dans les BLIs, une électrode en papier simple entièrement composée de fibres de cellulose a été préparée. Cette électrode a été testée en tant qu'électrode de travail dans une pile bouton *vs* du lithium métal. Les expériences de voltampérométrie cyclique, illustrées à la Figure 4, ont révélé que les fibres de cellulose (ligne discontinue) étaient inactives électrochimiquement jusqu'à un potentiel de 4,2 V, ce qui fait de ce type d'électrode des candidats potentiels pour une utilisation dans les BLIs. Comme le montre la Figure 4, les propriétés électrochimiques de l'électrode de papier dans la fenêtre de potentiel allant de 2 V à 4,2 V *vs* Li/Li+ étaient similaire aux propriétés électrochimiques d'une électrode de référence constituée d'une cale en acier inoxydable servant d'électrode de travail (ligne pleine). Les courants enregistrés pour l'électrode en papier et l'électrode de référence étaient inférieurs d'environ quatre ordres de grandeur à ceux obtenus avec une électrode de LFP autoportante comme le montre la Figure 5.

### ii. Propriétés électrochimiques des séparateurs de papier intégrés

Les séparateurs de papier intégrés tels que décrits à l'Exemple 1(e) déposés directement sur le film d'électrode tel que représenté sur la figure 3(D) ont également été caractérisés par voltamétrie cyclique afin de vérifier l'influence des séparateurs en papier sur les propriétés électrochimiques. La Figure 5 montre les voltamogrammes cycliques obtenus pour une électrode de LFP autoportante incluant un séparateur de papier intégré (ligne discontinue) en comparaison avec une électrode de LFP autoportante avec un séparateur Celgard^{MC} (ligne pleine). Les voltamogrammes cycliques obtenus ont montré que le séparateur de papier intégré n'affectait pas négativement de manière substantielle les propriétés électrochimiques de l'électrode de LFP autoportante, les polarisations (ΔE) des deux électrodes étant similaires.

De plus, l'intensité des pics d'oxydoréduction enregistrés avec une électrode de LFP autoportante incluant un séparateur de papier intégré était légèrement supérieure à celle d'une électrode de LFP autoportante avec un séparateur Celgard^{MC}. Ce résultat peut s'expliquer par l'amélioration des propriétés mécaniques et une intégrité accrue du film.

### iii. Effet de l'utilisation d'un deuxième matériau conducteur électronique modifié versus non modifié sur les propriétés électrochimiques d'électrodes de LFP autoportantes

La Figure 6(A) présente les résultats de voltamétrie cyclique et la Figure 6(B) des résultats de capacité spécifique enregistrés avec trois électrodes de LFP autoportantes ayant la même charge de matériau électrochimiquement actif et obtenues par le même procédé. Cependant, trois carbones différents ont été utilisés, à savoir VGCFs non modifiés (ligne pleine), VGCFs-COOH (ligne discontinue) et VGCFs-SOsH (ligne pointillée). Comme le montre la Figure 6(A), les voltamogrammes cycliques étaient similaires. Cependant, les capacités spécifiques présentées à la Figure 6(B) montrent une amélioration substantielle des performances électrochimiques des électrodes autoportantes incluant du carbone modifié, ce qui est particulièrement apparent aux vitesses de cyclage de 2C et 5C. À une densité de courant plus faible (par exemple C/10), les capacités de décharge des trois électrodes de LFP autoportantes étaient similaires et d'environ 155 mAh.g⁻¹. Lorsque la vitesse de cyclage a été augmentée à 1C, la capacité de décharge est restée à environ 140 mAh.g⁻¹ pour les deux électrodes de LFP autoportantes comprenant des VGCFs modifiés, tandis qu'une capacité d'environ 120 mAh.g⁻¹ a été obtenue en utilisant les VGCFs non modifiés. Cette capacité correspond à la capacité de décharge obtenue à un taux de 5C pour les deux électrodes de LFP autoportantes modifiées. L'amélioration des performances électrochimiques peut être attribuée à la nature hydrophile des substituants qui permettrait au carbone de mieux remplir la porosité créée par les fibres de cellulose. La Figure 7 montre des photographies en (A) de l'électrode de LFP autoportante comprenant du VGCF non modifié, et en (B) de l'électrode de LFP autoportante comprenant le VGCF-COOH. La Figure 7(B) montre que les fibres de cellulose étaient visibles à la surface de l'électrode, donnant un film plus solide avec le matériau électrochimiquement actif et le deuxième matériau conducteur électronique piégés dans les fibres de cellulose. Ainsi, à 5C, environ 50% et 77% de la capacité de décharge initiale ont été récupérés lorsque des VGCFs non modifiés et VGCFs-COOH ont été utilisés, respectivement.

### iv. Effet de la nature du deuxième matériau conducteur électronique sur les propriétés électrochimiques des électrodes de LFP autoportantes

Dans la composition de l'électrode, 50% en poids de la quantité de deuxième matériau conducteur électronique (VGCFs) ont été remplacés par un autre type de carbone (par exemple, par du carbone Denka^{MC} ou par des NTCs). La Figure 8 compare la capacité spécifique d'électrodes autoportantes comprenant différents mélanges de carbones modifiés. La Figure 8(A) montre les résultats pour une combinaison de VGCFs-COOH et de Denka-COOH (carrés) et les résultats pour une combinaison de VGCFs-SOsH et de Denka-SOsH (triangles). La Figure 8(B) montre les résultats d'une combinaison de VGCFs-COOH et de NTCs-COOH (carrés) et les résultats d'une combinaison de VGCFs-SOsH et de NTCs-SOsH (cercles). Dans les deux cas, l'utilisation du Denka^{MC} (voir Figure 8 (A)) a réduit les performances électrochimiques des films lithium-ion. Cependant, une amélioration des performances électrochimiques a été observée lorsque 50% en poids de la quantité deuxième matériau conducteur électronique ont été remplacés par des NTCs. En particulier, la capacité spécifique obtenue à une vitesse de cyclage de 1C est d'environ 140 mAh.g⁻¹ lorsque du carbone Denka^{MC} est utilisé, tandis que la même capacité est atteinte pour les électrodes de LFP autoportantes comprenant des NTCs modifiés à 2C (voir Figure 8 (B)). En ce qui concerne l'utilisation de NTCs modifiés, une légère amélioration des performances électrochimiques a été observée en comparaison des électrodes de LFP autoportantes comprenant exclusivement des VGCFs comme deuxième matériau conducteur électronique.

### v. Effet de la température de calandrage sur les propriétés électrochimiques

L'effet du calandrage des électrodes de LFP autoportantes à différentes températures a également été étudié. La Figure 9(A) présente les résultats de voltamétrie cyclique et la Figure 9(B) les résultats de capacité en fonction du nombre de cycles de la même électrode calandrée à une température de 25 °C et à une température de 50 °C. La Figure 9(A) montre une excellente reproductibilité pour les deux électrodes de LFP autoportantes calandrées à des températures différentes. Bien que seuls les résultats d'électrodes de LFP autoportantes comprenant une combinaison de VGCFs-COOH et de NTCs-COOH en tant que deuxième matériau conducteur électronique soient présentés, une reproductibilité élevée a aussi été démontrée que l'électrode de LFP comprenne des NTCs, du carbone Denka ^{MC} ou des VGCFs.

De plus, la capacité spécifique obtenue pour les électrodes calandrées à une température de 50°C ou 80°C est légèrement supérieure à celle des électrodes calandrées à une température de 25°C, comme le montrent les Figures 9(B) et 10. Ce résultat peut être attribué à un meilleur contact électronique et à une meilleure conductivité entre le matériau électrochimiquement actif et le deuxième matériau conducteur électronique à l'intérieur du film.

Enfin, l'épaisseur de l'électrode autoportante diminue avec l'augmentation de la température de calandrage. Ainsi, une épaisseur d'environ 100 µm a généralement été obtenue à une température de calandrage de 25 °C, tandis qu'une épaisseur d'environ 80 µm et d'environ 70 µm a été obtenue respectivement avec des températures de calandrage de 50 °C et 80 °C. La nature du matériau conducteur électronique ne semble pas avoir d'effet significatif sur l'épaisseur après calandrage, qui semble être plutôt principalement influencé par la quantité de fibres de cellulose utilisée.

### vi. Effet de la modification de surface du matériau électrochimiquement actif sur les propriétés électrochimiques d'électrodes de LFP autoportantes

L'utilisation de carbones hydrosolubles s'est avérée particulièrement intéressante pour obtenir de meilleures performances électrochimiques et réduire le temps de préparation. Dans le même ordre d'idées, la surface du matériau électrochimiquement actif (par exemple, C-LFP) a été greffée avec au moins un groupement aryle comprenant un groupe fonctionnel hydrophile (par exemple, -aryle-COOH) selon la procédure décrite à l'Exemple 1(c). La Figure 10 présente les performances électrochimiques de deux électrodes de LFP d'épaisseurs différentes fabriquées avec le matériau LFP-COOH modifié.

Des travaux récents ont indiqué que des charges élevées de groupes greffés peuvent conduire à des capacités spécifiques inférieures (voir Delaporte, N. et al., ACS applied materials & interfaces, 7(33), 18519-18529; et Delaporte, N. et al., Journal of Power Sources, 280, 246-255). Cependant, les capacités spécifiques pour le LFP non modifié et modifié selon le présent procédé étaient avantageusement similaires. Par conséquent, le greffage d'espèces organiques n'a pas affecté négativement de manière significative les performances électrochimiques. Bien que non évalué, ceci peut être attribué à un nombre très faible (< 1% en poids) de groupements greffés.

Il a donc été démontré que la modification de la surface du carbone et du LFP-COOH permettait de fabriquer un film autoportant résistant en moins d'environ 10 minutes le tout simplement en mélangeant dans une solution aqueuse.

### vii. Propriétés électrochimiques des électrodes de LTO autoportantes

Des électrodes négatives autoportantes ont également été préparées en utilisant un procédé similaire. Plus précisément, le Li₄Ti₅O₁₂ (LTO) est un matériau électrochimiquement actif d'intérêt pour une application en BLIs. En raison de sa tension de fonctionnement se situant à un potentiel suffisamment élevé (1,55 V *vs* Li/Li +), ce matériau ne forme pas de couche d'interphase solide-électrolyte (SEI). De plus, le LTO est qualifié de matériau ayant une contrainte nulle puisqu'il reste stable durant l'insertion et la désinsertion d'ions lithium (voir Zaghib, K. et al., Journal of Power Sources, 248, (2014): 1050-1057). Semblable au LFP, le LTO est un matériau relativement peu coûteux et donc un candidat idéal pour des BLIs à faible coût.

Des films de LTO autoportants avec différentes charges ont été préparés selon le procédé décrit à la Figure 1. Les résultats de voltamétrie cyclique et de capacité spécifique sont présentés à la Figure 11. Comme le montre la Figure 11(A), lorsque la charge du film augmente, l'intensité des pics d'oxydation et de réduction sur le voltamogramme augmente aussi. Puisque le pic d'oxydation et le pic de réduction augmentent proportionnellement dans chaque cas, la polarisation reste inchangée. Cette propriété électrochimique démontre que cette technique de fabrication est adaptée pour l'utilisation de charges élevée de matériau éléctochimiquement actif. De plus, les capacités spécifiques correspondantes, illustrées à la Figure 11(B), étaient très similaires jusqu'à une vitesse de cyclage de 2C. À cette vitesse de cyclage, une capacité de 135 mAh.g⁻¹ a été obtenue, ce qui représente environ 85% de la capacité de décharge initiale de 160 mAh.g⁻¹. De légères variations de capacité ont été observées à 5C entre les électrodes de charges différentes, mais une capacité d'environ 90 à 100 mAh.g⁻¹ a été récupérée.

### viii. Effet de la nature du deuxième matériau conducteur électronique sur les propriétés électrochimiques des électrodes de LTO autoportantes

Dans la composition de l'électrode, 50% en poids de la quantité de deuxième matériau conducteur électronique (VGCFs) ont été remplacés par un autre type de carbone (par exemple, du carbone Denka ^{MC} ou des NTCs). Les performances électrochimiques de telles électrodes sont représentées à la Figure 12. Comme indiqué à la Figure 12(A), les expériences de voltampérométrie cyclique ont révélé des pics d'oxydation et de réduction plus intenses et plus nets lorsqu'une combinaison de VGCFs-COOH et de NTCs-COOH a été utilisée (ligne discontinue) en comparaison avec une combinaison de VGCFs-COOH et de Denka^{MC}-COOH (ligne pointillée) ou avec le contrôle comprenant uniquement du VGCFs-COOH (ligne pleine) comme matériau conducteur. La Figure 12(B) présente les expériences de cyclage avec différentes vitesses de cyclage. Des capacités d'environ 120, 105 et 95 mAh.g⁻¹ ont été obtenues à une vitesse de cyclage de 5C respectivement pour des électrodes de LTO obtenues avec une combinaison de VGCFs-COOH et de NTCs-COOH (cercles), le contrôle comprenant VGCFs-COOH seul (carrés) et une combinaison de VGCFs-COOH et de carbone Denka^{MC}-COOH (triangles). Des résultats similaires ont été obtenus lorsque les groupes -aryle-COOH ont été remplacés par -aryle-SOsH (non représenté sur la Figure 12). Comme pour le résultat du cyclage d'électrodes de LFP présenté à la Figure 8, l'ajout de carbone Denka^{MC} a diminué les performances électrochimiques des électrodes de LTO. Cependant, une fois encore, une amélioration des performances électrochimiques a été observée lorsqu'une petite quantité (50% en poids de la quantité de deuxième matériau conducteur électronique) de NTCs modifiés était ajoutée, en particulier à des vitesses de cyclage élevées.

### ix. Effet de la nature du deuxième matériau conducteur électronique sur les résultats de cyclage à long terme d'électrodes de LTO autoportantes

La cyclabilité des électrodes autoportantes de LTO a été évaluée avec des expériences de cyclage long à long terme à C/2. La Figure 13 présente la rétention de capacité sur 300 cycles de charge et de décharge pour deux électrodes de LTO différentes, l'une comprenant VGCFs-COOH seul et l'autre comprenant une combinaison de VGCFs-COOH et de NTCs-COOH. Près de 100% de la capacité de décharge initiale à C/2 a été conservée après le 300^{e} cycle. Ainsi, des capacités d'environ 157 et 150 mAh.g⁻¹ ont été obtenues pour plusieurs centaines de cycles à C/2 lorsque l'électrode comprenait respectivement une combinaison de VGCFs-COOH et de NTCs-COOH (cercles) et VGCFs-COOH seul (carrés).

### x. Préparation de BLIs complètes comprenant des électrodes de LFP et LTO autoportantes pour évaluation des propriétés électrochimiques

Les BLIs complètes ont été assemblées avec des électrodes de LFP et de LTO autoportantes. Le matériau électrochimiquement actif de l'électrode négative (LTO) à son état délithié et peut insérer trois ions lithiums selon l'équation (1) (voir Zaghib, K. et al., Journal of Power Sources, (1999) 81, 300-305):

3 LiFePO₄ + Li₄Ti₅O₁₂ → 3 FePO₄ + Li₇Ti₅O₁₂ (1)

Étant donné que la capacité spécifique de 165 mAh.g⁻¹ pour l'électrode de LTO autoportante est légèrement supérieure à la capacité spécifique de 160 mAh.g⁻¹ obtenue pour le film autoportant LFP, des cellules électrochimiques avec des ratios LFP/LTO en poids d'environ 1 peuvent être utilisées. Cependant, un léger excès de matériau LTO (ratio LFP/LTO d'environ 0,85) a été utilisé pour des raisons de sécurité, tel que généralement utilisé dans les batteries commerciales.

### xi. Effet du séparateur sur les propriétés électrochimiques de BLIs complètes comprenant des électrodes de LFP et LTO autoportantes

La Figure 14 présente la capacité spécifique de deux batteries LFP/LTO avec la même quantité de matériau électrochimiquement actif pour les deux électrodes mais avec un séparateur différent. Les capacités de décharge obtenues étaient plus élevées lorsqu'un séparateur de papier Kodoshi^{MC} (cercles) était utilisé à la place d'un séparateur Celgard^{MC} classique (carrés). Une augmentation de 10 mAh.g⁻¹ a ainsi été obtenue pour la batterie entièrement en papier pour chaque vitesse de cyclage variant de C/24 à 2C en comparaison avec la cellule assemblée avec un séparateur Celgard^{MC}. Ainsi, 100 et 115 mAh.g⁻¹ ont été obtenues à 5C respectivement pour la batterie utilisant le séparateur Celgard ^{MC} et le séparateur de papier. Les performances électrochimiques améliorées obtenues avec un séparateur de papier pourraient réduire le prix des dispositifs de stockage d'énergie en remplaçant le séparateur Celgard^{MC} par un séparateur de papier.

### xii. Effet du ratio en poids LFP/LTO sur les propriétés électrochimiques des BLIs complètes

Les performances électrochimiques étant nettement améliorées avec un séparateur de papier, plusieurs autres batteries LFP/LTO contenant différentes quantités de matériau électrochimiquement actif et un séparateur de papier Kodoshi^{MC} ont été assemblées. Des BLIs complètes avec des masses de LFP et de LTO comprises entre 40 et 70 mg ont été obtenues en utilisant le procédé illustré à la Figure 1. Des BLIs complètes avec des ratios LFP/LTO de 1 et d'environ 0,85 en poids ont été testées électrochimiquement. Les capacités spécifiques pour ces électrodes sont rapportées à la Figure 15. Comme le montre cette dernière, les résultats ne montrent aucune différence significative lorsqu'un excès de LTO est utilisé. Cependant, une amélioration significative est visible lorsque la batterie est utilisée à des vitesses de cyclage plus élevées. En fait, à 5C pour les deux électrodes fabriquées avec 50 mg de LFP, les capacités spécifiques obtenues étaient d'environ 105 et d'environ 115 mAh.g⁻¹, lorsqu'un ratio LFP/LTO de 1 et 0,85 en poids a respectivement été utilisé. Ainsi, dans ces conditions, une meilleure rétention de la capacité à des vitesses de cyclage élevées a été obtenue pour des BLIs ayant un excès de LTO. La Figure 15 montre également que les capacités spécifiques obtenues étaient légèrement inférieures lorsque les charges d'électrodes négatives et positives augmentaient, en particulier à des vitesses de cyclage élevées. Par exemple, la batterie assemblée avec les films d'électrode comprenant 40 mg de LFP et 40 mg de LTO (carrés) délivrait 135 mAh.g⁻¹ à 2C, tandis que 125 mAh.g⁻¹ (cercles) et moins de 120 mAh.g⁻¹ (étoiles) ont été obtenus lorsque les films comprenant de 50 mg de LFP et de LTO et 60 mg de LFP et de LTO ont respectivement été utilisés. Le même comportement a été observé à 5C puisque 115 mAh.g⁻¹, 105 mAh.g⁻¹ et 95 mAh.g⁻¹ ont été obtenus respectivement pour les films d'électrode contenant 40, 50 et 60 mg de matériau électrochimiquement actif.

### xiii. Effet du séparateur sur les expériences de cyclage à long terme sur des BLIs complètes comprenant des électrodes de LFP et LTO autoportantes

La cyclabilité de batteries LFP/LTO complètes a été évaluée avec des expériences de cyclage à long terme à C/2 après plusieurs cycles de formation à C/24, à C/10 et à C/5. La Figure 16(A) présente la rétention de la capacité de rétention sur 200 cycles de charge et décharge pour la même composition de batterie, mais assemblée avec des séparateurs Celgard^{MC} (carrés) et Kodoshi^{MC} (cercles). Comme le montre la Figure 16(A), l'utilisation d'un séparateur de papier Kodoshi^{MC} a permis d'augmenter les capacités spécifiques. Environ 140 et environ 130 mAh.g⁻¹ ont respectivement été obtenus pour le premier cycle à C/2 lorsqu'un séparateur de papier et un séparateur Celgard^{MC} ont été utilisés. Après 200 cycles, environ 92% de la capacité de décharge initiale a été récupérée. La Figure 16(A) montre que le séparateur de papier n'a pas significativement amélioré la rétention de capacité bien que les capacités spécifiques soient demeurées supérieures. Dans les deux cas, une perte de capacité progressive au cours du cyclage a été observée, ce qui peut être attribué au LFP. Des observations similaires ont été rapportées pour des électrodes réalisées avec des plaques submicrométriques de LFP (voir Yang, XF et al., ChemSusChem, (2014) 7 (6), 1618-1622) et avec des particules de LFP de taille réduite cyclées à 1C (Lux, SF et al., Journal de la Société électrochimique (2010) 157.3, A320-A325).

### xiv. Expériences de cyclages à long terme sur des BLIs complètes comprenant des électrodes de LFP et de LTO autoportantes et des séparateurs de papier Kodoshi^{MC}

Des expériences de cyclages à long terme pour plusieurs BLIs comprenant à la fois des électrodes assemblées avec des séparateurs de papier et des électrodes négatives et positives autoportantes préparées selon le procédé décrit à l'Exemple 1(d) ont été enregistrées à C/2. Comme présenté à la Figure 16(B), les BLIs de ces expériences comprenaient différentes quantités de LFP et de LTO. Comme on peut le voir à la figure 16(B), l'augmentation de la charge de matière électrochimiquement active semble avoir un effet significatif sur la rétention de capacité et sur la capacité de décharge initiale qui était légèrement supérieure.

L'effet d'une augmentation des charges de matériau actif sur la rétention de la capacité et sur la capacité de décharge initiale a été confirmé par des expériences à cycle long effectuées à une vitesse de 2C (Figure 17). Des capacités de décharge initiales de 121 mAh.g⁻¹ et 130 mAh.g⁻¹ ont été obtenues respectivement avec des batteries LFP/LTO comprenant 40 et 70 mg de LFP avec des ratios en poids LFP/LTO de 1. Après 1000 cycles de charge et décharge, environ 84% et 92% des capacités de décharge initiales ont été récupérées respectivement pour la batterie avec 40 mg de LFP et de LTO et 70 mg de LFP et de LTO.

### xv. Propriétés électrochimiques des électrodes de PTCDA autoportantes

Les propriétés électrochimiques des électrodes de PTCDA autoportantes ont été évaluées. La Figure 18 montre des résultats de voltamétrie cyclique et de capacité spécifique pour des électrodes de PTCDA autoportantes avec du lithium métallique comme contre-électrode et électrode de référence. Comme le montre la Figure 18(A), les résultats de voltamétrie cyclique ont révélé qu'une augmentation de la masse de PTCDA dans l'électrode autoportante entraîne une augmentation de la polarisation bien que l'intensité du pic d'oxydoréduction augmente légèrement sur le voltamogramme. Ce comportement a été confirmé par les résultats de capacité spécifique en fonction du nombre de cycles (voir Figure 18(B)).

Lors de la décharge d'électrodes de PTCDA autoportantes, la tension chute soudainement. La chute initiale du potentiel en circuit ouvert (OCP) à un plateau d'environ 2,4 V *vs* Li/Li+ peut être attribuée au passage du PTCDA à l'énolate de lithium avec l'intégration des ions Li+. Cependant, la capacité spécifique obtenue était d'environ 137 mAh.g⁻¹, correspondant à la moitié de la valeur théorique, car seuls deux ions lithium réagissent avec les fonctions cétone. L'insertion des deux autres Li+ se produit plutôt à l'intérieur de la fenêtre potentielle allant de 0,9 à 1,3 V *vs* Li/Li+. Néanmoins, un processus de décharge en profondeur peut endommager la structure et donc entraîner une forte irréversibilité.

Lorsque les électrodes de PTCDA autoportantes ont été cyclées à des vitesses supérieures à 1C (Figure 18(B)), les capacités de décharge diminuaient de manière significative avec une augmentation de la charge en masse active. Ainsi, des capacités d'environ 110, 60 et seulement 35 mAh.g⁻¹ ont été obtenues à 5C pour des films d'électrodes autoportantes en PTCDA comprenant respectivement 40, 50 et 60 mg de matériau électrochimiquement actif. Cependant, ces performances électrochimiques sont supérieures à celles généralement rapportées pour des électrodes étendues sur un collecteur de courant en aluminium. Par exemple, en suivant le nouveau procédé de fabrication, il a été possible de délivrer 120 mAh.g⁻¹ à 1C avec une électrode de PTCDA autoportante d'environ 6 mg.cm⁻².

### xvi. Effet d'un deuxième matériau conducteur électronique sur les expériences de cyclage long sur des électrodes de PTCDA autoportantes

La cyclabilité des électrodes de PTCDA autoportantes a été évaluée avec des expériences de cyclage long à C/10 après plusieurs cycles à différentes vitesses de cyclage allant de C/24 à 5C. La Figure 19 présente les résultats de capacité en décharge et d'efficacité coulombique en fonction du nombre de cycles sur 100 cycles de charge et de décharge pour la même composition d'électrode de PTCDA autoportante, à l'exception de la composition du deuxième matériau conducteur électronique. La Figure 19(A) montre les résultats pour une électrode de PTCDA autoportante comprenant VGCFs-COOH comme deuxième matériau conducteur électronique et la Figure 19(B) pour la même composition d'électrode de PTCDA autoportante mais comprenant un mélange de VGCFs-SOsH avec une petite quantité de NTCs-SOsH. Le PTCDA ayant une faible conductivité électronique, l'utilisation d'une grande quantité de carbone conducteur dans la composition d'électrode peut être nécessaire afin d'atteindre de bonnes performances électrochimiques. Lorsqu'une quantité de NTCs-SOsH a été ajoutée (Figure 19(B)), une capacité d'environ 110 mAh.g⁻¹ a été obtenue à 5C, tandis qu'une capacité de seulement 80 mAh.g⁻¹ a été délivrée pour l'électrode composée uniquement de VGCFs-COOH comme deuxième matériau conducteur électronique (Figure 19(A)).

Comme le montre la Figure 19, l'efficacité coulombique (%) diminue de manière significative avec le nombre de cycles. Les Figures 19(A) et 19(B) montrent également un agrandissement des 40 premiers cycles. Dans les deux cas, l'efficacité coulombique diminue progressivement jusqu'à l'atteinte, par exemple, de 85% après 4 cycles et après 12 cycles à de faibles vitesses de cyclage respectivement pour les électrodes autoportantes sans (Figure 19(A)) et avec une petite quantité de NTCs-SOsH (Figure 19(B)). L'efficacité coulombique est fortement améliorée par l'augmentation de la vitesse de cyclage, comme le démontre la Figure 19(B).

### xvii. Effet des cycles de formation sur les expériences de cycles longs effectuées avec des électrodes de PTCDA autoportantes

L'effet des cycles de formations sur la cyclabilité a également été évalué. Après 5 cycles à 5C, les expériences de cycles longs à C/10 ont été démarrées et l'efficacité coulombique a atteint environ 100%. Une bonne stabilité sur 100 cycles a été observée puisque 84% et 91% de la capacité de décharge initiale à C/10 ont été obtenus à la fin des expériences de cyclage à long terme respectivement pour les électrodes comprenant le VGCFs-COOH (Figure 19(A)) et le mélange de VGCFs-SOsH et NTCs-SOsH comme deuxième matériau conducteur électronique (Figure 19(B)). L'incorporation de NTCs-SOsH a permis d'améliorer la stabilité, et ce probablement principalement en raison de la conductivité électronique plus élevée du film d'électrode positive.

La cyclabilité des électrodes autoportantes PTCDA présentées à la Figure 19 a été évaluée avec des expériences de cyclage long à C/10 mais sans effectuer plusieurs cycles de charge et décharge à des vitesses de cyclage faibles et modérées (C/10 à 2C). La Figure 20 présente la rétention de la capacité sur 100 cycles de charge et décharge pour ces deux électrodes. Il a été montré qu'une formation rapide (5 cycles à 5C) permettait d'éviter la migration de PTCDA dans l'électrolyte et que l'efficacité coulombique restait proche de 100% pendant toute l'expérience de cyclage.

Comme le montre la Figure 20, une formation rapide (5 cycles à 5C) n'a pas eu d'impact significatif sur la cyclabilité. En effet, 80% et 91% de la capacité de décharge initiale à C/10 ont été obtenus après 70 cycles de charge et décharge à C/10 respectivement pour les électrodes comprenant le VGCFs-COOH (carrés) et pour le mélange de VGCFs-SOsH et NTCs-SOsH (cercles). Ces valeurs étaient similaires à celles calculées pour les expériences de cyclage galvanostatique de la Figure 19. Par conséquent, l'ajout d'une petite quantité de NTCs-SOsH dans la composition d'électrode améliore significativement la capacité de décharge mais également la cyclabilité sur 100 cycles. La perte rapide de capacité observée après 80 cycles de charge et décharge pour le film autoportant comprenant le VGCFs-COOH comme deuxième matériau conducteur électronique pourrait être due à la dégradation de l'électrode négative de lithium métallique.

### xviii. Effet de la masse de PTCDA sur les expériences à cycle long enregistrées avec des électrodes de PTCDA autoportantes

La cyclabilité des électrodes autoportantes de PTCDA avec des charges de matériau électrochimiquement actif plus élevées, c'est-à-dire comprenant 50 et 60 mg de matériau actif, a également été étudiée. La Figure 21 compare la cyclabilité en C/10 sur 100 cycles pour trois électrodes de PTCDA avec différentes charges de matériau électrochimiquement actif. Similairement aux résultats montrés sur la Figure 18, lorsque la charge de matériau actif a été augmentée, la capacité de décharge obtenue à des vitesses de cyclage élevées, et en particulier à 5C, diminuait de manière significative en raison de la résistance supérieure du film positif. Des rétentions de 91, 92 et 92% de la capacité de décharge initiale à C/10 ont été obtenues après 70 cycles de charge et décharge respectivement pour les électrodes comprenant 40, 50 et 60 mg de masse de matériau électrochimiquement actif.

Cependant, rapidement après ces 70 cycles, la capacité spécifique a soudainement diminué pour les films autoportants comprenant 50 mg (cercles) et 60 mg (triangles) de PTCDA. Par exemple, la perte de capacité progressive pourrait être principalement liée à la dégradation de l'électrode négative de lithium métallique.

### xix. Effet de la nature du deuxième matériau conducteur électronique sur les propriétés électrochimiques d'électrodes de graphite autoportantes

Comme le montre la Figure 22, des expériences de cyclage à long terme performé à C/10 ont été effectuées sur des électrodes de graphite autoportantes comprenant 40 mg de graphite et du VGCFs-SOsH (carrés) ou un mélange de VGCFs-SOsH et de NTCs-SOsH (cercles) comme deuxième matériau conducteur électronique. Comme généralement observée pour le graphite, au cours du premier cycle, l'efficacité coulombique était supérieure à 100% et atteignait 120 et 145% respectivement lorsque le VGCFs-SOsH seul et le mélange de VGCFs-SOsH et de NTCs-SOsH ont été utilisés comme deuxième matériau conducteur électronique.

L'utilisation de NTCs modifiés (NTCs-SOsH) a considérablement augmenté la surface spécifique de l'électrode composite négative et a ainsi conduit à une dégradation plus importante de l'électrolyte et à la dégradation de l'électrode négative de lithium métallique. Cependant, la conductivité électronique plus élevée du film autoportant comprenant des NTCs modifiés apporte une meilleure stabilité lors du cyclage et permet de délivrer 75 mAh.g⁻¹ supplémentaires en comparaison avec une électrode sans NTCs modifiés. Une perte de capacité progressive lors du cyclage a été observée pour les deux électrodes, celle-ci étant plus importante pour l'électrode composite négative sans NTCs.

### xx Effet de la modification de surface du matériau électrochimiquement actif sur les propriétés électrochimiques d'électrodes en graphite autoportantes

La Figure 23(A) présente des expériences de cyclage long pour deux électrodes de graphite avec des charges différentes (30 et 40 mg de matériau actif). Comme suggéré par les résultats de la Figure 22, la diminution de la capacité peut être liée à la résistance du film autoportant. La résistance du film peut être proportionnelle à la quantité de graphite utilisée dans la fabrication dudit film autoportant. Ainsi, avec un film autoportant comprenant 30 mg de graphite, la capacité de décharge initiale à C/10 était d'environ 380 mAh.g⁻¹, ce qui est substantiellement proche de la capacité théorique du graphite. La perte de capacité lors du cycle était également moins prononcée pour les électrodes autoportantes comprenant 30 mg de graphite que pour les électrodes autoportantes comprenant 40 mg de graphite.

La Figure 23(B) présente la cyclabilité de trois électrodes préparées avec du graphite modifié avec aryle-SOsH. En comparant les Figures 23(A) et 23(B), la capacité de décharge pour des charges similaires de matériau actif était significativement supérieure pour les électrodes autoportantes en graphite modifié avec des groupements SOsH que pour les électrodes autoportantes en graphite non modifié. Une capacité en décharge de 335 et de 405 mAh.g⁻¹ ont été obtenues pour la première décharge à C/10 respectivement pour une électrode autoportante comprenant 40 mg de graphite et pour une électrode autoportante comprenant 40 mg de graphite-SOsH. L'augmentation de la charge en matière active jusqu'à 50 mg a permis d'améliorer la cyclabilité et la capacité spécifique.

Comme le montre la Figure 23, les groupements -SO₃H fixés à la surface du carbone augmentent la capacité totale de la batterie. Ces groupements peuvent, par exemple, contribuer au stockage du lithium et à l'augmentation de la conductivité ionique. Comme le montre la Figure 23, l'efficacité coulombique était légèrement inférieure lors du premier cycle à C/24 lorsque le graphite modifié a été utilisé.

### xxi. Propriétés électrochimiques de BLIs complètes comprenant des électrodes autoportantes de LFP et de graphite

Des piles complètes LFP/graphite ont été assemblées. Le profil de charge et de décharge pour le premier cycle à C/24 pour les BLIs est présenté à la Figure 24(A). Un plateau plat autour de 3,25 V a été obtenu avec une faible polarisation. La première décharge a fourni environ 125 mAh.g⁻¹. Comme le montre la Figure 24(A), la forte irréversibilité conduit à une efficacité coulombique de 76% pour le premier cycle mais atteint environ 100% pour les cycles suivants à 1C. Des expériences de cyclage à long terme ont également été effectuées sur 300 cycles à 1C. La Figure 24(B) présente la stabilité des BLIs LFP/graphite. Après 300 cycles de charge et décharge, la capacité spécifique était d'environ 88 mAh.g⁻¹, ce qui correspond à 85% de la capacité de décharge initiale obtenue à 1C. Bien que l'efficacité coulombique soit restée constante à environ 100% pendant toute l'expérience, une diminution progressive de la capacité était perceptible.

### xxii. Propriétés électrochimiques de BLIs complètes comprenant des électrodes autoportantes de PTCDA et de graphite

Des BLIs de PTCDA/graphite entièrement organiques (sans métal de transition), comprenant des électrodes de PTCDA et de graphite autoportantes, ont été préparées et testées électrochimiquement. Les BLIs de PTCDA/graphite entièrement organiques comprenant des molécules d'oxydoréduction organiques et des composants biodégradables. Ces BLIs PTCDA/graphite entièrement organiques démontrent le concept de batteries non coûteuses et biodégradables.

Le PTCDA étant sous sa forme oxydée, une première étape de prélithiation était nécessaire. La prélithiation a été réalisée en assemblant des films autoportants de PTCDA avec des contre-électrodes en lithium à l'intérieur de piles boutons. La Figure 25(A) montre la première décharge jusqu'à 1,5 V *vs* Li/Li+ pour trois batteries PTCDA/Li comprenant 50 et 60 mg de matériau électrochimiquement actif pour la cathode. Afin d'obtenir une lithiation complète du PTCDA, le potentiel a été maintenu à 1,5 V pendant 3 heures (voir la Figure 25(B)). Les piles boutons ont ensuite été désassemblées et les électrodes autoportantes PTCDA prélithiées ont été récupérées pour être assemblées avec des électrodes de graphite autoportantes.

La Figure 26 présente les résultats des premières charge et décharge obtenues à un courant constant de C/24 enregistrées entre 1,5 et 3,5 V *vs* graphite pour deux BLIs PTCDA prélithié/graphite. En raison de la formation d'une SEI sur l'électrode négative en graphite, la capacité spécifique de la première charge était supérieure à la capacité théorique de 137 mAh.g-¹ pour le PTCDA et atteignait environ 160 mAh.g⁻¹. Lorsque la BLI a été déchargée, une petite quantité de lithium a possiblement été consommée de manière irréversible par le graphite et des capacités de seulement 104 et 108 mAh.g⁻¹ ont été obtenues respectivement pour les électrodes positives comprenant 50 mg de PTCDA et 60 mg de PTCDA. Les résultats de cyclage à long terme à C/10 pour ces BLIs sont montrés à la Figure 26(B). Tel qu'observé pour les électrodes de graphite (voir la Figure 23), une perte de capacité progressive lors du cyclage a été observée pour les BLIs complètes PTCDA/graphite et peut être principalement attribuée à la consommation du lithium par l'électrode négative en graphite. Une légère amélioration peut être observée avec une augmentation de la charge en PTCDA en raison de la quantité plus élevée de lithium disponible.

## Revendications

1. Électrode autoportante comprenant :
- un premier matériau conducteur électronique servant de collecteur de courant, la surface dudit premier matériau conducteur électronique étant greffée avec au moins un groupement aryle de Formule I : 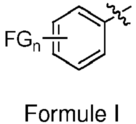 dans laquelle :
FG est un groupement fonctionnel hydrophile ; et n est un nombre entier naturel compris dans l'intervalle de 1 à 5, de préférence n est compris dans l'intervalle de 1 à 3, de préférence n est 1 ou 2, ou plus préférentiellement n est 1 ;
- un liant comprenant des fibres de cellulose ;
- un matériau électrochimiquement actif ; et
- optionnellement un deuxième matériau conducteur électronique, la concentration dudit deuxième matériau conducteur électronique augmentant de la première surface à la deuxième surface du film solide, le deuxième matériau conducteur électronique étant de préférence greffé avec au moins un groupement aryle de Formule I ;
dans laquelle,
l'électrode autoportante est constituée d'un film solide ayant une première et une deuxième surface ;
la concentration du premier matériau conducteur électronique augmente de la deuxième surface à la première surface du film solide, de préférence la première surface comprenant majoritairement le premier matériau conducteur électronique ; et
la concentration du matériau électrochimiquement actif augmente de la première surface à la deuxième surface du film solide, de préférence la deuxième surface comprend majoritairement le matériau électrochimiquement actif et, si présent, le deuxième matériau conducteur électronique.

2. Électrode autoportante selon la revendication 1, dans laquelle le premier matériau conducteur électronique comprend des fibres de carbone, de préférence des fibres de carbone formées en phase gazeuse (VGCFs).

3. Électrode autoportante selon la revendication 1 ou 2, dans laquelle les fibres de cellulose sont des fibres de cellulose non modifiées, et/ou dans laquelle les fibres de cellulose sont exemptes de cations d'aluminium, et/ou dans laquelle la longueur moyenne des fibres de cellulose est comprise entre 5 nm et 5 mm, ou entre 250 nm et 3 mm, ou entre 500 nm et 3 mm, ou entre 1 µm et 3 mm, ou entre 100 µm et 3 mm, ou entre 250 µm et 3 mm, ou entre 500 µm et 3 mm, ou entre 750 µm et 2,5 mm, ou entre 1 mm et 2,5 mm et de préférence entre 0.5 mm et 3 mm.

4. Électrode autoportante selon l'une quelconque des revendications 1 à 3, dans laquelle (i) le matériau électrochimiquement actif est sous forme de particules enrobées d'une couche de carbone dans une configuration noyau-enrobage (*core-shell*)*,* de préférence ladite couche de carbone est greffée avec au moins un groupement aryle de Formule I telle que définie dans la revendication 1, et/ou (ii) le matériau électrochimiquement actif est choisi parmi des particules d'oxyde de métal, des particules d'oxyde de métal lithié, des particules de phosphate de métal, des particules de phosphate de métal lithié, des matériaux à base de carbone et des matériaux actifs organiques, de préférence le métal est un métal de transition choisi parmi le titane (Ti), le fer (Fe), le manganèse (Mn), le vanadium (V), le nickel (Ni), le cobalt (Co) et une combinaison d'au moins deux de ceux-ci.

5. Électrode autoportante selon l'une quelconque des revendications 1 à 4, dans laquelle l'électrode autoportante est : (i) une électrode positive et le matériau électrochimiquement actif comprend de préférence des particules de phosphate de fer lithié (LiFePO₄), du dianhydride pyromellitique (PMDA), du dianhydride naphtalène-1,4,5,8-tétracarboxylique (NTCDA), ou du dianhydride pérylène-3,4,9,10-tétracarboxylique (PTCDA) ; ou (ii) une électrode négative et le matériau électrochimiquement actif comprend de préférence des particules de titanate de lithium (Li₄Ti₅O₁₂) ou un matériau à base de carbone, de préférence le matériau à base de carbone est du graphène ou du graphite.

6. Électrode autoportante selon l'une quelconque des revendications 1 à 5, dans laquelle le deuxième matériau conducteur électronique est choisi parmi le noir de carbone, le noir d'acétylène, le graphite, le graphène, les fibres de carbone, les nanofibres de carbone, les nanotubes de carbone et une combinaison d'au moins deux de ceux-ci.

7. Électrode autoportante selon l'une quelconque des revendications 1 à 6, dans laquelle le groupe fonctionnel hydrophile est un groupe fonctionnel acide carboxylique ou acide sulfonique, et de préférence dans laquelle le groupement aryle de Formule I est l'acide p-benzoïque ou l'acide p-benzènesulfonique.

8. Procédé pour la fabrication d'une électrode autoportante selon l'une quelconque des revendications 1 à 7, le procédé comprenant les étapes de :
(a) greffage d'au moins un groupement aryle de Formule I sur un premier matériau conducteur électronique ;
(b) dispersion du premier matériau conducteur électronique modifié obtenu à l'étape (a) dans un mélange aqueux comprenant des fibres de cellulose pour obtenir une première dispersion aqueuse ;
(c) filtration la première dispersion aqueuse sur une membrane filtrante pour obtenir un film, de préférence ledit film comprenant un côté riche en matériau conducteur électronique et un côté riche en fibres de cellulose, le côté riche en matériau conducteur électronique faisant face à la membrane filtrante ;
(d) dispersion d'un matériau électrochimiquement actif, et éventuellement d'un deuxième matériau conducteur électronique, dans un milieu aqueux pour obtenir une deuxième dispersion aqueuse ;
(e) filtration de la deuxième dispersion aqueuse sur le film obtenu à l'étape (c) pour produire une électrode autoportante sur la membrane filtrante ; et
(f) décollement de l'électrode autoportante de la membrane filtrante.

9. Procédé selon la revendication 8, comprenant en outre :
une étape de séchage du film obtenu à l'étape (c); et/ou
une étape de greffage sur le deuxième matériau conducteur électronique d'au moins un groupement aryle de Formule I avant l'étape (d) ; et/ou
une étape de calandrage de l'électrode autoportante, de préférence ladite étape de calandrage est effectuée à une température située entre la température ambiante et environ 80°C, ou à une température située dans l'intervalle d'environ 50°C à environ 80°C, ou à une température d'environ 25°C ; et/ou
une étape de production d'un séparateur par filtration d'un mélange aqueux comprenant des fibres de cellulose directement sur l'électrode autoportante obtenue à l'étape (e) avant l'étape (f) ; et/ou
dans lequel le matériau électrochimiquement actif est sous forme de particules enrobées d'une couche de carbone, le procédé comprenant en outre une étape de greffage d'au moins un groupement aryle de Formule I sur ladite couche de carbone avant l'étape (d).

10. Procédé selon la revendication 8 ou 9, dans lequel les étapes de greffage du procédé comprennent :
(i) génération d'un ion aryle diazonium par mise en contact d'une aniline de Formule II : 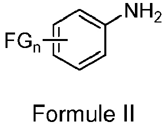 dans laquelle :
FG et n sont tels que définis à la revendication 1, avec un agent de diazotation ; et
(ii) réaction de l'ion aryle diazonium généré à l'étape (i) avec le carbone d'une couche de carbone sur la surface du matériau électrochimiquement actif, ou avec le premier ou le deuxième matériau conducteur électronique ;
dans lequel l'ion aryle diazonium est de préférence généré *in situ* de sorte que les étapes (i) et (ii) sont effectuées simultanément.

11. Procédé selon la revendication 10, dans lequel l'agent de diazotation est présent dans une plage de valeurs allant de 0,01 à 0,04 équivalent par rapport au carbone, ou d'environ 0,03 équivalent par rapport au carbone et/ou dans lequel l'agent de diazotation est présent dans une plage de valeurs allant de 1 à 4 équivalents par rapport à l'aniline de Formule II, ou d'environ 3 équivalents par rapport aniline de Formule II.

12. Procédé selon la revendication 10 ou 11, dans lequel l'agent de diazotation est un sel de nitrite, de préférence le nitrite de sodium (NaNO₂), ou un nitrite d'alkyle, de préférence le nitrite de tert-butyle (t-BuONO).

13. Procédé selon l'une quelconque des revendications 8 à 12, dans lequel l'étape de greffage est réalisée dans un milieu aqueux acide, de préférence une solution aqueuse d'acide sulfurique ou dans un solvant polaire aprotique, de préférence l'acétonitrile.

14. Cellule électrochimique comprenant une électrode négative, une électrode positive et un électrolyte, dans laquelle au moins une des électrodes négative et positive est une électrode autoportante telle que définie à l'une quelconque des revendications 1 à 7, de préférence l'électrode négative et l'électrode positive sont toutes deux des électrodes autoportantes.

15. Cellule électrochimique selon la revendication 14, comprenant en outre un séparateur, de préférence ledit séparateur étant un séparateur de polypropylène, ou un séparateur de polypropylène-polyéthylène-polypropylène (PP/PE/PP), ou un séparateur cellulosique, ou ledit séparateur étant un séparateur cellulosique obtenu par filtration d'un mélange aqueux comprenant des fibres de cellulose directement sur l'électrode autoportante.

16. Cellule électrochimique selon la revendication 14 ou 15, dans laquelle l'électrolyte est un électrolyte liquide comprenant un sel de lithium dans un solvant, ou un électrolyte gel comprenant un sel de lithium dans un solvant et/ou un polymère solvatant, ou un électrolyte polymère solide comprenant un sel de lithium dans un polymère solvatant.

17. Batterie comprenant au moins une cellule électrochimique telle que définie à l'une quelconque des revendications 14 à 16, de préférence ladite batterie est choisie parmi une batterie au lithium ou lithium-ion, une batterie au sodium ou sodium-ion, ou une batterie au magnésium ou magnésium-ion.

## Patentansprüche

1. Selbsttragende Elektrode, umfassend:
- ein erstes elektronenleitendes Material, das als Stromkollektor dient, wobei die Oberfläche des ersten elektronenleitenden Materials mit mindestens einer Arylgruppe der Formel I gepfropft ist: 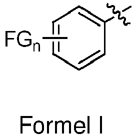 wobei:
FG eine hydrophile funktionelle Gruppe ist; und n eine natürliche Ganzzahl im Bereich von 1 bis 5 ist, vorzugsweise n im Bereich von 1 bis 3 liegt, vorzugsweise n 1 oder 2 ist, oder noch bevorzugter n 1 ist;
- ein Bindemittel, das Zellulosefasern umfasst;
- ein elektrochemisch aktives Material; und
- optional ein zweites elektronenleitendes Material, wobei die Konzentration des zweiten elektronenleitenden Materials von der ersten Oberfläche zur zweiten Oberfläche des festen Films zunimmt, wobei das zweite elektronenleitende Material vorzugsweise mit mindestens einer Arylgruppe der Formel I gepfropft ist;
wobei
die selbsttragende Elektrode aus einem festen Film mit einer ersten und einer zweiten Oberfläche besteht;
die Konzentration des ersten elektronenleitenden Materials von der zweiten Oberfläche zur ersten Oberfläche des festen Films zunimmt, wobei vorzugsweise die erste Oberfläche überwiegend das erste elektronenleitende Material umfasst; und
die Konzentration des elektrochemisch aktiven Materials von der ersten Oberfläche zur zweiten Oberfläche des festen Films zunimmt, wobei vorzugsweise die zweite Oberfläche überwiegend das elektrochemisch aktive Material und, falls vorhanden, das zweite elektronenleitende Material umfasst.

2. Selbsttragende Elektrode nach Anspruch 1, wobei das erste elektronenleitende Material Kohlenstofffasern, vorzugsweise gasphasengeformte Kohlenstofffasern (VGCFs), umfasst.

3. Selbsttragende Elektrode nach Anspruch 1 oder 2, wobei die Zellulosefasern unmodifizierte Zellulosefasern sind, und/oder wobei die Zellulosefasern frei von Aluminiumkationen sind, und/oder wobei die durchschnittliche Länge der Zellulosefasern zwischen 5 nm und 5 mm oder zwischen 250 nm und 3 mm oder zwischen 500 nm und 3 mm oder zwischen 1 µm und 3 mm oder zwischen 100 µm und 3 mm oder zwischen 250 µm und 3 mm oder zwischen 500 µm und 3 mm oder zwischen 750 µm und 2,5 mm oder zwischen 1 mm und 2,5 mm und vorzugsweise zwischen 0,5 mm und 3 mm liegt.

4. Selbsttragende Elektrode nach einem der Ansprüche 1 bis 3, wobei (i) das elektrochemisch aktive Material in Form von Partikeln vorliegt, die mit einer Kohlenstoffschicht in einer Core-Shell-Konfiguration beschichtet sind, wobei vorzugsweise die Kohlenstoffschicht mit mindestens einer Arylgruppe der Formel I nach Anspruch 1 gepfropft ist, und/oder (ii) das elektrochemisch aktive Material aus Metalloxidpartikeln, lithiumhaltigen Metalloxidpartikeln, Metallphosphatpartikeln, lithiumhaltigen Metallphosphatpartikeln, kohlenstoffbasierten Materialien und organischen aktiven Materialien ausgewählt ist, wobei vorzugsweise das Metall ein Übergangsmetall ist, das aus Titan (Ti), Eisen (Fe), Mangan (Mn), Vanadium (V), Nickel (Ni), Kobalt (Co) und einer Kombination von mindestens zwei davon ausgewählt ist.

5. Selbsttragende Elektrode nach einem der Ansprüche 1 bis 4, wobei die selbsttragende Elektrode ist: (i) eine positive Elektrode und das elektrochemisch aktive Material vorzugsweise lithiumhaltige Eisenphosphatpartikel (LiFePO₄), Pyromellitsäuredianhydrid (PMDA), Naphthalin-1,4,5,8-tetracarboxyldianhydrid (NTCDA) oder Perylen-3,4,9,10-tetracarboxyldianhydrid (PTCDA) umfasst; oder (ii) eine negative Elektrode, wobei das elektrochemisch aktive Material vorzugsweise Lithiumtitanatpartikel (Li₄Ti₅O₁₂) oder ein Material auf Kohlenstoffbasis umfasst, wobei das Material auf Kohlenstoffbasis vorzugsweise Graphen oder Graphit ist.

6. Selbsttragende Elektrode nach einem der Ansprüche 1 bis 5, wobei das zweite elektronenleitende Material aus Carbonschwarz, Acetylenruß, Graphit, Graphen, Kohlenstofffasern, Kohlenstoffnanofasern, Kohlenstoffnanoröhren und einer Kombination von mindestens zwei davon ausgewählt ist.

7. Selbsttragende Elektrode nach einem der Ansprüche 1 bis 6, wobei die hydrophile funktionelle Gruppe eine funktionelle Carbonsäure- oder Sulfonsäuregruppe ist, und vorzugsweise wobei die Arylgruppe der Formel I p-Benzoesäure oder p-Benzolsulfonsäure ist.

8. Verfahren zur Herstellung einer selbsttragenden Elektrode nach einem der Ansprüche 1 bis 7, wobei das Verfahren die folgenden Schritte umfasst:
(a) Pfropfen mindestens einer Arylgruppe der Formel I auf ein erstes elektronenleitendes Material;
(b) Dispergieren des in Schritt (a) erhaltenen ersten modifizierten elektronenleitenden Materials in einem wässrigen Gemisch, das Zellulosefasern enthält, um eine erste wässrige Dispersion zu erhalten;
(c) Filtrieren der ersten wässrigen Dispersion auf einer Filtermembran, um einen Film zu erhalten, wobei der Film vorzugsweise eine Seite umfasst, die reich an elektronenleitendem Material ist, und eine Seite, die reich an Zellulosefasern ist, wobei die Seite, die reich an elektronenleitendem Material ist, der Filtermembran zugewandt ist;
(d) Dispergieren eines elektrochemisch aktiven Materials und gegebenenfalls eines zweiten elektronenleitenden Materials in einem wässrigen Medium, um eine zweite wässrige Dispersion zu erhalten;
(e) Filtrieren der zweiten wässrigen Dispersion auf dem in Schritt (c) erhaltenen Film, um eine selbsttragende Elektrode auf der Filtermembran zu erzeugen; und
(f) Ablösen der selbsttragenden Elektrode von der Filtermembran.

9. Verfahren nach Anspruch 8, ferner umfassend:
einen Schritt des Trocknens des in Schritt (c) erhaltenen Films; und/oder
einen Schritt des Pfropfens von mindestens einer Arylgruppe der Formel I auf das zweite elektronenleitende Material vor Schritt (d); und/oder
einen Schritt des Kalanderns der selbsttragenden Elektrode, wobei der Schritt des Kalanderns vorzugsweise bei einer Temperatur zwischen Raumtemperatur und etwa 80 °C oder bei einer Temperatur im Bereich von etwa 50 °C bis etwa 80 °C oder bei einer Temperatur von etwa 25 °C durchgeführt wird; und/oder
einen Schritt des Herstellens eines Separators durch Filtern eines wässrigen Gemischs, das Zellulosefasern enthält, direkt auf die in Schritt (e) erhaltene selbsttragende Elektrode vor Schritt (f); und/oder
wobei das elektrochemisch aktive Material in Form von Partikeln vorliegt, die mit einer Kohlenstoffschicht beschichtet sind, wobei das Verfahren ferner einen Schritt des Pfropfens mindestens einer Arylgruppe der Formel I auf die Kohlenstoffschicht vor dem Schritt (d) umfasst.

10. Verfahren nach Anspruch 8 oder 9, wobei die Pfropfschritte des Verfahrens umfassen:
(i) Erzeugen eines Aryldiazoniumions durch Inkontaktbringen eines Anilins der Formel II: 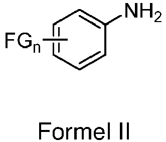 wobei:
FG und n nach Anspruch 1 sind, mit einem Diazotierungsmittel; und
(ii) Reagieren des in Schritt (i) erzeugten Aryldiazoniumions mit dem Kohlenstoff einer Kohlenstoffschicht auf der Oberfläche des elektrochemisch aktiven Materials oder mit dem ersten oder zweiten elektronenleitenden Material;
wobei das Aryldiazoniumion vorzugsweise *in situ* erzeugt wird, so dass die Schritte (i) und (ii) gleichzeitig durchgeführt werden.

11. Verfahren nach Anspruch 10, wobei das Diazotierungsmittel in einem Wertebereich von 0,01 bis 0,04 Äquivalenten, bezogen auf Kohlenstoff, oder von etwa 0,03 Äquivalenten, bezogen auf Kohlenstoff, vorliegt, und/oder wobei das Diazotierungsmittel in einem Wertebereich von 1 bis 4 Äquivalenten, bezogen auf Anilin der Formel II, oder von etwa 3 Äquivalenten, bezogen auf Anilin der Formel II, vorliegt.

12. Verfahren nach Anspruch 10 oder 11, wobei das Diazotierungsmittel ein Nitritsalz, vorzugsweise Natriumnitrit (NaNO₂), oder ein Alkylnitrit, vorzugsweise tert-Butylnitrit (t-BuONO), ist.

13. Verfahren nach einem der Ansprüche 8 bis 12, wobei der Pfropfschritt in einem sauren wässrigen Medium, vorzugsweise einer wässrigen Schwefelsäurelösung, oder in einem aprotischen polaren Lösungsmittel, vorzugsweise Acetonitril, durchgeführt wird.

14. Elektrochemische Zelle mit einer negativen Elektrode, einer positiven Elektrode und einem Elektrolyten, wobei mindestens eine von der negativen und der positiven Elektrode eine selbsttragende Elektrode nach einem der Ansprüche 1 bis 7 ist, vorzugsweise sind sowohl die negative Elektrode als auch die positive Elektrode selbsttragende Elektroden.

15. Elektrochemische Zelle nach Anspruch 14, ferner umfassend einen Separator, wobei der Separator vorzugsweise ein Polypropylenseparator oder ein Polypropylen-Polyethylen-Polypropylen-Separator (PP/PE/PP) oder ein Zellulose-Separator ist, oder der Separator ein Zellulose-Separator ist, der durch Filtration eines wässrigen Gemischs, das Zellulosefasern enthält, direkt auf der selbsttragenden Elektrode erhalten wird.

16. Elektrochemische Zelle nach Anspruch 14 oder 15, wobei der Elektrolyt ein flüssiger Elektrolyt ist, der ein Lithiumsalz in einem Lösungsmittel umfasst, oder ein Gel-Elektrolyt, der ein Lithiumsalz in einem Lösungsmittel umfasst, oder ein fester Polymerelektrolyt, der ein Lithiumsalz in einem solvatisierenden Polymer umfasst.

17. Batterie mit mindestens einer elektrochemischen Zelle nach einem der Ansprüche 14 bis 16, wobei die Batterie vorzugsweise aus einer Lithium- oder Lithium-Ionen-Batterie, einer Natrium- oder Natrium-Ionen-Batterie oder einer Magnesium- oder Magnesium-Ionen-Batterie ausgewählt ist.

## Claims

1. Self-standing electrode comprising:
- a first electronically conductive material serving as a current collector, the surface of said first electronically conductive material being grafted with at least one aryl group of Formula I: 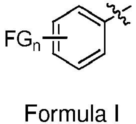 wherein:
FG is a hydrophilic functional group; and n is an integer in the range of 1 to 5, preferably n is in the range of 1 to 3, preferably n is 1 or 2, or more preferably n is 1;
- a binder comprising cellulose fibers;
- an electrochemically active material; and
- optionally a second electronically conductive material, the second electronically conductive material preferably being grafted with at least one aryl group of Formula I;
wherein,
the self-standing electrode consists of a solid film having a first and a second surface;
the concentration of the first electronically conductive material increases from the second surface to the first surface of the solid film, the first surface preferably mainly comprising the first electronically conductive material; and
the concentration of the electrochemically active material and, if present, the second electronically conductive material increase from the first surface to the second surface of the solid film, preferably the second surface mainly comprises the electrochemically active material and, if present, the second electronically conductive material.

2. The self-standing electrode according to claim 1, wherein the first electronically conductive material comprises carbon fibers, preferably vapor grown carbon fibers (VGCFs).

3. The self-standing electrode according to claim 1 or 2, wherein the cellulose fibers are unmodified cellulose fibers, and/or wherein the cellulose fibers are free of aluminum cations, and/or wherein the average length of the cellulose fibers is between 5 nm and 5 mm, or between 250 nm and 3 mm, or between 500 nm and 3 mm, or between 1 µm and 3 mm, or between 100 µm and 3 mm, or between 250 µm and 3 mm, or between 500 µm and 3 mm, or between 750 µm and 2.5 mm, or between 1 mm and 2.5 mm, and preferably between 0.5 mm and 3 mm.

4. The self-standing electrode according to any one of claims 1 to 3, wherein (i) the electrochemically active material is in the form of particles coated with a carbon layer in a core-shell configuration, preferably said carbon layer is grafted with at least one aryl group of Formula I as defined in claim 1, and/or (ii) the electrochemically active material is selected from metal oxide particles, lithiated metal oxide particles, metal phosphate particles, lithiated metal phosphate particles, carbon-based materials, and active organic materials, preferably the metal is a transition metal selected from titanium (Ti), iron (Fe), manganese (Mn), vanadium (V), nickel (Ni), cobalt (Co), and a combination of at least two thereof.

5. The self-standing electrode according to any one of claims 1 to 4, wherein the self-standing electrode is: (i) a positive electrode and the electrochemically active material preferably comprises lithiated iron phosphate particles (LiFePO₄), pyromellitic dianhydride (PMDA), 1,4,5,8-naphthalenetetracarboxylic dianhydride (NTCDA), or 3,4,9,10-perylenetetracarboxylic dianhydride (PTCDA); or (ii) a negative electrode and the electrochemically active material preferably comprises lithium titanate (Li₄Ti₅O₁₂) particles or a carbon-based material, preferably the carbon-based material is graphene or graphite.

6. The self-standing electrode according to any one of claims 1 to 5, wherein the second electronically conductive material is selected from carbon black, acetylene black, graphite, graphene, carbon fibers, carbon nanofibers, carbon nanotubes, and a combination of at least two thereof.

7. The self-standing electrode according to any one of claims 1 to 6, wherein the hydrophilic functional group is a carboxylic acid or a sulfonic acid functional group, and preferably wherein the aryl group of Formula I is p-benzoic acid or p-benzenesulfonic acid.

8. Process for the manufacturing of a self-standing electrode according to any one of claims 1 to 7, the process comprising the steps of:
(a) grafting at least one aryl group of Formula I on a first electronically conductive material;
(b) dispersing the first modified electronically conductive material obtained in step (a) in an aqueous mixture comprising cellulose fibers to obtain a first aqueous dispersion;
(c) filtering the first aqueous dispersion on a filter membrane to obtain a film, said film preferably comprising an electronically conductive material rich side and a cellulose fibers rich side, the electronically conductive material rich side facing the filter membrane;
(d) dispersing an electrochemically active material and optionally a second electronically conductive material in an aqueous medium to obtain a second aqueous dispersion;
(e) filtering the second aqueous dispersion on the film obtained in step (c) to produce a self-standing electrode on the filter membrane; and
(f) peeling off the self-standing electrode from the filter membrane.

9. The process according to claim 8, further comprising:
a step of drying the film obtained in step (c); and/or
a step of grafting at least one aryl group of Formula I on the second electronically conductive material prior to step (d); and/or
a step of calendering the self-standing electrode, preferably said calendering step is carried out at a temperature between room temperature and about 80°C, or at a temperature in the range of from about 50°C to about 80°C, or at a temperature of about 25°C; and/or
a step of producing a separator by filtering an aqueous mixture comprising cellulose fibers directly on the self-standing electrode obtained in step (e) prior to step (f); and/or
wherein the electrochemically active material is in the form of particles coated with a carbon layer and the process further comprises a step of grafting at least one aryl group of Formula I on said carbon layer prior to step (d).

10. The process according to claim 8 or 9, wherein the grafting steps of the process comprise:
(i) generating an aryl diazonium ion by contacting an aniline of Formula II: 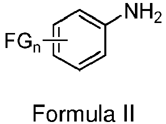 wherein:
FG and n are as defined in claim 1, with a diazotizing agent; and
(ii) reacting the aryl diazonium ion generated in step (i) with the carbon of a carbon layer on the surface of the electrochemically active material, or with the first or second electronically conductive material;
wherein the aryl diazonium ion is preferably generated *in situ* such that steps (i) and (ii) are performed simultaneously.

11. The process according to claim 10, wherein the diazotizing agent is present in a range of from 0.01 to 0.04 equivalent with respect to the carbon, or of about 0.03 equivalent with respect to the carbon, and/or wherein the diazotizing agent is present in a range of from 1 to 4 equivalents with respect to the aniline of Formula II, or of about 3 equivalents with respect to the aniline of Formula II.

12. The process according to claim 10 or 11, wherein the diazotizing agent is a nitrite salt, preferably sodium nitrite (NaNO₂), or an alkyl nitrite, preferably tert-butyl nitrite (t-BuONO).

13. The process according to any one of claims 8 to 12, wherein the grafting step is carried out in an acidic aqueous medium, preferably an aqueous sulfuric acid solution or in a polar aprotic solvent, preferably acetonitrile.

14. Electrochemical cell comprising a negative electrode, a positive electrode, and an electrolyte, wherein at least one of the negative and positive electrodes is a self-standing electrode as defined in any one of claims 1 to 7, preferably the negative electrode and the positive electrode are both self-standing electrodes.

15. The electrochemical cell according to claim 14, further comprising a separator, preferably said separator being a polypropylene separator, or a polypropylene-polyethylene-polypropylene (PP/PE/PP) separator, or a cellulosic separator, or said separator being a cellulosic separator obtained by filtrating an aqueous mixture comprising cellulose fibers directly on the self-standing electrode.

16. The electrochemical cell according to claim 14 or 15, wherein the electrolyte is a liquid electrolyte comprising a lithium salt in a solvent, or a gel electrolyte comprising a lithium salt in a solvent and/or a solvating polymer, or a solid polymer electrolyte comprising a lithium salt in a solvating polymer.

17. Battery comprising at least one electrochemical cell as defined in any one of claims 14 to 16, preferably said battery is selected from a lithium or lithium-ion battery, a sodium or sodium-ion battery, or a magnesium or magnesium-ion battery.
